## Europäisches Patentamt

## European Patent Office

## Office européen des brevets

(11) Publication number: **0 031 726**
**B1**

(12) **EUROPEAN PATENT SPECIFICATION**

(45) Date of publication of patent specification: **12.12.84**

(21) Application number: **80304719.0**

(22) Date of filing: **23.12.80**

(51) Int. Cl.³: **G 03 G 15/16,** G 03 G 15/00, G 03 G 21/00

(54) Electrostatic copying apparatus.

(30) Priority: **29.12.79 JP 173526/79**
**21.03.80 JP 36726/80**
**15.04.80 JP 49854/80**
**29.12.79 JP 181555/79**
**29.02.80 JP 26914/80**

(43) Date of publication of application:
**08.07.81 Bulletin 81/27**

(45) Publication of the grant of the patent:
**12.12.84 Bulletin 84/50**

(84) Designated Contracting States:
**DE FR GB NL**

(56) References cited:
**GB-A-1 201 794**
**GB-A-1 204 752**
**GB-A-1 327 722**
**GB-A-1 433 155**
**GB-A-2 035 967**
**US-A-3 390 622**
**US-A-3 878 540**
**US-A-4 003 569**

(73) Proprietor: **MITA INDUSTRIAL CO. LTD.**
**2-28, 1-chome, Tamatsukuri Higashi-ku**
**Osaka 540 (JP)**

(72) Inventor: **Miyoshi, Yoshitake**
**Court A 404 2-207, Higashiikoma**
**Ikoma-shi Nara-ken (JP)**
Inventor: **Shibata, Kiyoshi**
**13-73, Tsurumi 3-chome Tsurumi-ku**
**Osaka (JP)**
Inventor: **Watanabe, Toshio**
**285-32, Okutenjincho 3-chome Takatsuki-shi**
**Osaka (JP)**
Inventor: **Kai, Masami**
**1251-5, Tanidacho**
**Ikoma-shi Nara-ken (JP)**
Inventor: **Ohata, Yousuke**
**1-10-4, Nishiura Habikino-shi**
**Osaka (JP)**

(74) Representative: **Haigh, Charles Roy et al**
**J.A. KEMP & CO. 14 South Square Gray's Inn**
**London WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(56) References cited:
US-A-4 006 987
US-A-4 054 380
US-A-4 134 672
US-A-4 140 386

## Description

The present invention relates to an electrostatic copying apparatus wherein a stationary original document image is projected onto a photosensitive member during movement of an optical device for exposing, and an electrostatic latent image formed on the photosensitive member is developed and transferred onto a copy sheet and then is fixed, the copying apparatus including jam detecting means for immediately detecting when a copy sheet is jammed in a copy sheet transport path and having portions thereof displaceable to give access to the transport path for the removal of jammed copy sheets therefrom, there being provided in the transport path a transport means for transporting copy sheets after completion of the image transfer operation.

As examples of such electrostatic copying apparatus reference may be made to the disclosures of US—A—4054380 and US—A—4134672 which describe quite sophisticated constructions of electrostatic copying apparatus. While problems of paper jams arise in such large and expensive machines, it is more prevalent in simpler and less expensive copying machines where, in order to save expense, the transport mechanism for conducting copy sheets through the apparatus is itself simplified.

The provision of the jam detecting means for stopping operation of the machine when a paper jam occurs is intended to restrict as far as possible, damage occurring to the copying apparatus as a result of the jammed paper. Thus, for example, when jamming occurs a copy sheet being transported can be damaged with other consequential effects such as damaging later copy sheets or, for example, having damage occurring through a jammed sheet being burned in a heat fixing device. Frequently the damaging effects of jamming can escalate and it is most important that upon jamming taking place the machine be stopped immediately and all the copy sheets in the transport path of the machine be removed so as to avoid any further damage once the machine is once again set into operation. Frequently in order to obtain a reliable transport path the transport path is fairly restricted with the result that the sheets are closely confined in their passage therethrough and are difficult to remove when a paper jam occurs. This has proved to be of particular importance adjacent the photosensitive member on which the electrostatic latent image is formed since the photosensitive latent on this member is very sensitive to damage and scratches which can easily be incurred by a jammed copy sheet being removed from adjacent thereto when a paper jam is being cleared. The present invention is directed at providing a structure in such an electrostatic copying apparatus whereby copy sheets being fed through the apparatus can be closely and accurately guided so as to minimize the chance of a jam occurring and yet which utilizes a simple and cheap structure such that when a jam is to be cleared the transport path guide structure is cleared well away from the photosensitive member. This facilitates removal of a jammed copy sheet from that area with the very minimum risk of it being dragged into contact with the photosensitive member and thus damaging the delicate surface of that member.

The present invention is characterized in that in the region of the photosensitive member the transport path comprises a pair of top and bottom guide plates for guiding copy sheets, said guide plates being mounted so as to abut against a transferring zone of the photosensitive member, being mounted for pivotal movement about a fixed horizontal shaft and being spring biased to approach each other in the vicinity of the transferring zone, the transport means is carried by a frame extending beneath the photosensitive member and pivotably supported near the downstream end for swinging movement away from the photosensitive member, a horizontal axis and supporting means for releasably supporting the frame in its raised operative position adjacent the photosensitive member, the bottom guide plate being supported in its operative position by the frame and being downwardly biased so as to move away from the top guide plate in the vicinity of the transferring zone when the frame is pivotally swung downwardly about the supporting horizontal axis.

With this structure the guide plates in their operative position are quite closely spaced where they guide the copy sheet accurately into the transferring zone of the photosensitive member and yet automatically are opened out wide, when a jam is to be cleared, by motion of the frame carrying the transport means downstream of the photosensitive member being simply pivoted away from its operative position adjacent the photosensitive member. A simple single control can thus be used to open up access for removal of jammed copy sheets not only from the immediate region of the photosensitive member but also from the feeding means immediately upstream thereof and the transport means immediately downstream thereof.

Preferably a peeling pawl is provided above the frame for peeling off copy sheets from the photosensitive member and is spring biased about a horizontal axis toward the peripheral surface of the photosensitive member, further biasing means being provided for causing the peeling pawl to move away from the peripheral surface of the photosensitive member against the elastic force of the spring bias when the frame is caused to swing downwardly from its operative position. With this arrangement automatically upon the frame being dropped away from the photosensitive member in order to clear a jam the peeling pawl used to separate copy sheets from the photosensitive member is also automatically withdrawn from the surface of the photosensitive member so as to minimize the chance of damage occurring to the photosensitive member.

In order to minimize the chance of leakage of static electricity from the area of the photosensitive member via the copy sheet, with consequent damage to the image formed on the copy sheet, it is preferred that the frame and guide plates are so mounted that any member of them which contacts a copy sheet, at least of portion of which is in the transferring area, is electrically insulated from the apparatus housing.

In order to speed the operation when the apparatus is being used for a multiple copy run part of the preliminary cycle of the copying apparatus can be ignored when carrying out subsequent copies so that the apparatus is preferably so adapted to operate that the distance between successive copy sheets is less in the middle of a multiple copy run than between successive copy sheets which are not in a multiple copy run. Clearly with this arrangement the jam detecting means must automatically be so controlled as to adapt for the shorter distance between successive copy sheets passing along the transport path.

Brief description of the drawings

A detailed description of the invention will be made with reference to the accompanying drawings herein like numerals designate corresponding parts in the figures.

Figure 1 is an overall perspective view of an electrostatic copying apparatus according to one preferred embodiment of the invention;

Figure 2 is a plane view of the operating display panel 159;

Figure 3 is a schematic longitudinal sectional view as observed from the user;

Figure 4 is a simplified perspective view depicting the driving mechanism of the optical device 238;

Figure 5 is a longitudinal sectional view of the copy sheet transport path 12;

Figure 6 is a schematic longitudinal sectional view depicting the driving means;

Figure 7 is performance wave-form when copying operation is accomplished onto the copy sheet of A4 size stored in the upper cassette 155;

Figure 8 is performance wave-form when copying operation is accomplished onto the copy sheet of A4 size stored in the bottom cassette 156;

Figure 9 is an enlarged sectional view in the vicinity of the photosensitive drum 2;

Figure 10 is a simplified front view in the vicinity of the top and bottom guide plates 17, 18;

Figure 11 is a plane view of the top and bottom guide plates 17, 18 shown in Figure 10;

Figure 12 is a schematic longitudinal sectional view taken along the line XII—XII of Figure 10;

Figure 13 is a plane view of the bottom guide plate 18;

Figure 14 is a front view in the vicinity of the top and bottom guide plates 21, 22;

Figure 15 is a perspective view of the top and bottom guide plates 21, 22 shown in Figure 14;

Figure 16 is a longitudinal sectional view taken along the line XVI—XVI of Figure 15;

Figure 17 is a schematic front view in the vicinity of the peeling member 95 and the carriage belt 26 as omitted the front wall 30;

Figure 18 is a schematic plane view of Figure 17 as omitted the peeling member 95;

Figure 19 is a front view of the supporting member 73 as omitted the front wall 30;

Figure 20 is a schematic sectional view taken along the line XX—XX of Figure 19;

Figure 21 is a plane view of the peeling member 95;

Figure 22 is a perspective fragmentary view of the peeling member 95;

Figure 23 is a simplified front view depicting movement of the peeling click 23;

Figure 24 is a perspective fragmentary view of the sump 331;

Figure 25 is a left side view of the sump 331 shown in Figure 24;

Figure 26 is a simplified overall view of the cleaning device 13;

Figure 27 is a sectional view taken along the line XXVII—XXVII of Figure 24;

Figure 28 is a sectional view of the photosensitive drum 2 depicting movement of toner particles 390 from the drum surface to the sump 331;

Figure 29 is a simplified side view depicting moving steps of toner particles 391, 392 with respect to the permanent magnet bar 330 and the stay 343;

Figure 30 is a simplified perspective view of the fixing device 320;

Figure 31 is a simplified side view of the toner removal member 362;

Figure 32 is a plane view of the toner removal member 362;

Figure 33 is a front view of the driving mechanism for providing timing pulse to control the electrostatic copying apparatus;

Figure 34 is a plane view of the driving mechanism shown in Figure 33.

Detailed description of the preferred embodiment

The following detailed description is of the best presently comtemplated mode of carrying out the invention. This description is not to be taken a limiting sense, but is made merely for the purpose of illustrating the general principles of the invention since the scope of the invention is best defined by tye appended claims.

## Entire structure

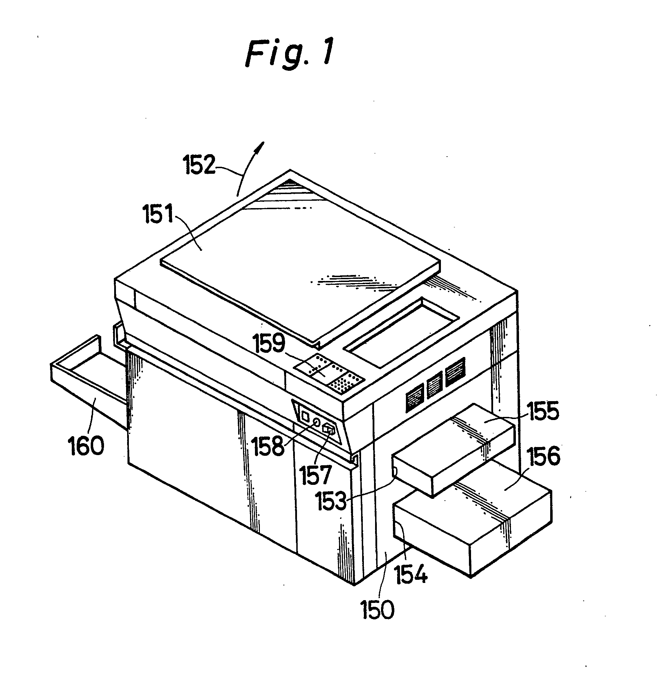

This electrostatic copying apparatus comprises a document cover lid 151 which is pivotally mounted to the top portion of an apparatus housing 150 and swung upwardly in the direction of arrow 152 as Figure 1. The document cover lid 151 allows easier placement of an original document to be copied on the plate surface of the apparatus housing 150. The apparatus housing 150 has on the right side two openings 153 and 154. Copy sheet cassettes 155 and 156 are arranged up and down respectively, and capable of being inserted in the openings 153 and 154 and being removed therefrom. The upper cassette 155 is adapted to store copy sheets of different sizes B4, B5, B6, A3, A4 and A5, which are up to Japanese Industrial Standard (JIS), and of Folio size. The lower cassette 156 is adapted to store copy sheets of different sizes B4, B5, A3 and A4. Two hundred fifty sheets (250) of paper can be stacked in the upper cassette 155. and five hundred sheets (500) of paper in the lower cassette 156. There are provided a power switch 157 and a power lamp 158 to the upper front portion of the apparatus housing 150. An operating display panel 159 is disposed to the top portion thereof. When the power switch 157 is closed, the power lamp 158 turns on. Sequentially the operating display panel 159 is operated and copying operation is accomplished. An original document image is transferred onto a copy sheet supplied from either of the copy sheet cassette 155 or 156, and the copy sheet reproduced is advanced to a copy collection tray 160 accommodated on the left side wall of the apparatus housing 150.

## Entire operation

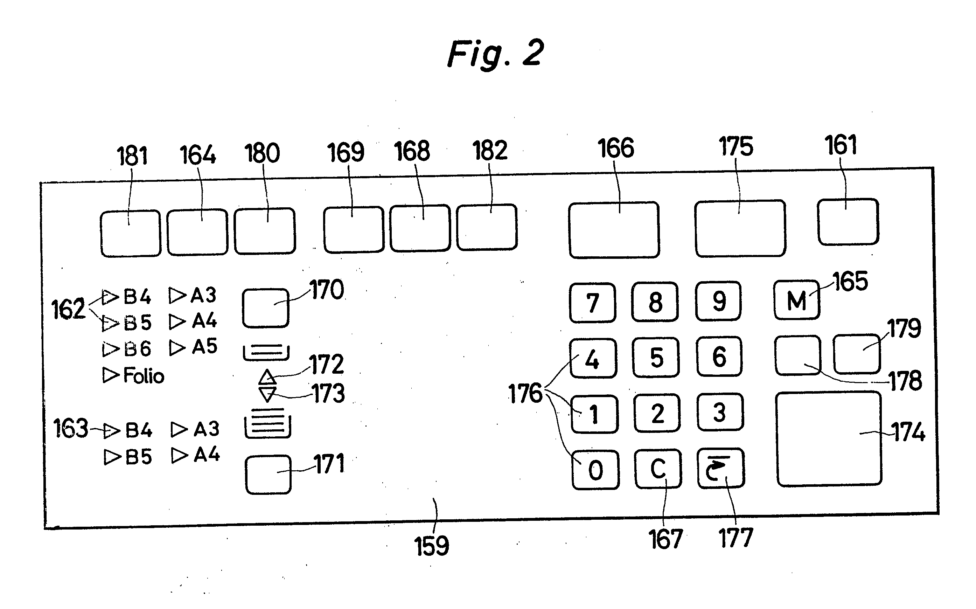

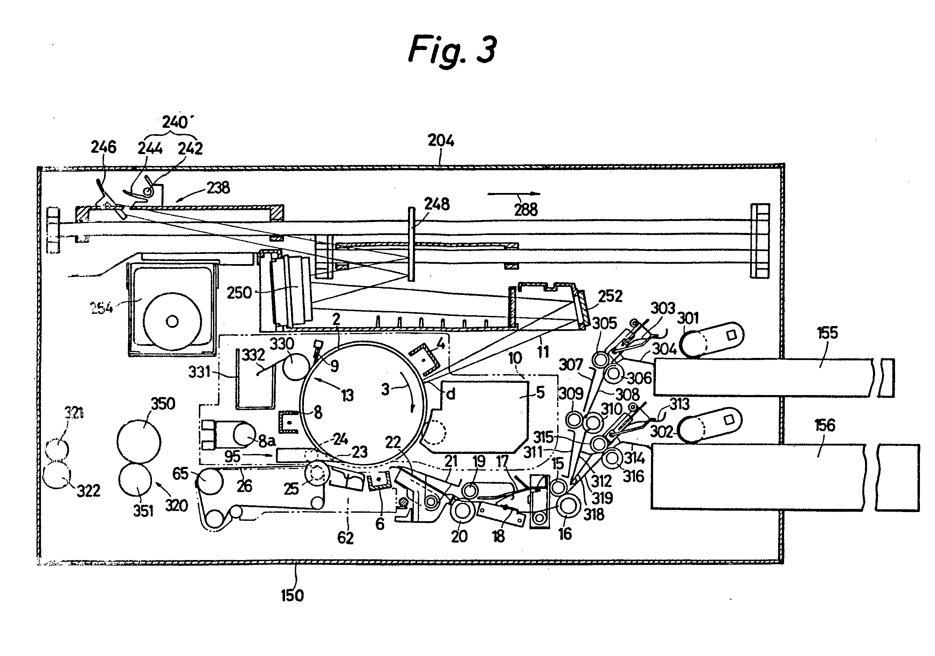

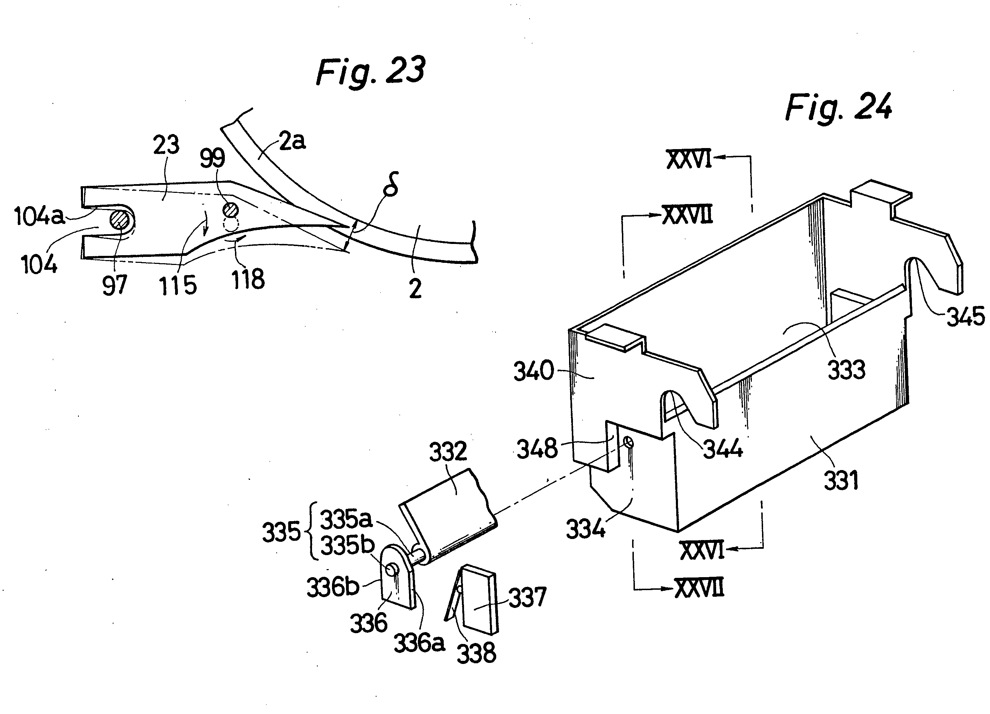

Referring to Figure 2, a plane view of the operating display panel 159 is depicted therein in detail. When the power switch 157 (shown in Figure 1 as aforementioned) is closed, the power lamp 158 turns on. Then when a fixing device as after-mentioned is enabled to fix, a lamp 161 turns on. Either of a lamp 162 or 163 corresponding to the cassette 155 or 156 which stores the stack of copy sheets in preselected size turns on when the cassette 155 or 156 is installed into the apparatus housing 150. A lamp 164 turns on when the stack of the copy sheets are thoroughly consumed. When a number of multiple copies is to be set by a keyboard 176, a memory button 165 is pushed in advance. Accordingly a number of copies of two digits is displayed on a display station 166. The value inputted by a key 176 is cleared by pushing a clear button 167. A display lamp 168 turns on when the store of toner particles in the developing device are entirely emptied. A display lamp 169 turns on when a sump 331 (refer to Figure 24 as after-mentioned) for storing toner particles is filled with residual toner particles removed from the surface of the photosensitive drum 2 (refer to Figure 3 as after-mentioned) wherein cleaning step is performed after transferring step is completed. With the notice of turning on the lamp 169, the operator dump the toner particles removed in the cleaning step from the sump 331. By pushing either of a cassette select button 170 or 171 to select one of the cassettes 155 and 156, a lamp 172 or 173 corresponding to the selected cassette turns on and the selected cassette 155 or 156 can supply copy sheets for copying.

In copying operation, push a print button 174. A number of copies on the display station 166 is continually reproduced. A number of copies to be reproduced is displayed on a display station 175 by the value of two digits. During the pre-determined number of copies are carried on, that is to say, when the reproduced number of copies i.e. the number of the display station 175 is smaller than the pre-determined number of the display station 166, copy operation of another original document can be intruded into ordinary copying step by pushing an intrusion button 177. On pushing the intrusion button 177, an intrusion display lamp 182 turns on. Then on pushing the print button 174, copying operation is performed at the general standard level of copy density. To set for thicker copy density of exposure, a print button 178 is pushed alternating with the print button 174. To set for copy thinner density of exposure, push a print button 179 in place of the print buttons 174 and 178. When a paper jamming occurs on the copy sheet transport path, a display lamp 180 turns on and copying operation is stopped. If a counter is provided to count the reproduced number of copies, a display lamp 181 keeps turning on.

## Copying operation

Figure 3 is a schematic longitudinal sectional view as observed from the side of the operator. A cylindrical drum 2, whose outer periphery is coated with a photosensitive layer, is rotatably placed in the center of the apparatus housing 150. A corona charger 4 for charging the photosensitive layer of the drum 2, a magnetic brush developing device 5 for developing visibly an electrostatic latent image formed onto the photosensitive layer of the drum 2, a transfer corona charger 6 for transferring the visible toner image onto a copy sheet, a corona charger 7 for peeling off the copy sheet from the drum 2 after completion of copying operation a charge erasing device 8 and a charge erasing lamp 8a for erasing residual electric charge over the surface of the photosensitive layer, a cleaning device 13 and a blade member 9 are closely placed in turn along the rotational direction 3 over the periphery of the drum 2. The photosensitive drum 2, the corona charger 4, the magnetic brush developing device 5, the peeling member 95, the charge erasing device 8, the charge erasing lamp 8a, the cleaning device 13 and the blade member 9 are located in the retaining means 10 depicted by imaginary line or dots-and-dash line, which is movable reciprocally in the forward or backward direction i.e. perpendicularly to the paper sheet of Figure 3.

Optical device

An optical device 238 is mounted over the photosensitive drum 2. An original document image on a transparent plate 204 is projected on the photosensitive layer of the drum 2 between the corona charger 4 and the magnetic brush developing device 5 as depicted by a line. Therefore a light image is projected onto the charged surface of the photosensitive drum 2. In the optical device 238, a projector 240 comprises an exposure lamp 242 and a reflective plate 244. The light projected from the projector 240 through the transparent plate 204 and reflected therefrom onto the original document passes through a reflective mirror 246, a movable reflective mirror 248, an in-mirror lens 250 and another reflective mirror 252 to form the original document image onto the exposure zone "d" as shown by an arrow 11. On copying operation, the projector 240 and the reflective mirror 246 are driven to run by the motor 254 from left to right in the direction of arrow 288 in Figure 3. Then the movable reflective mirror 248 runs simultaneously from left to right at a half speed of the projector 240 as shown in Figure 3.

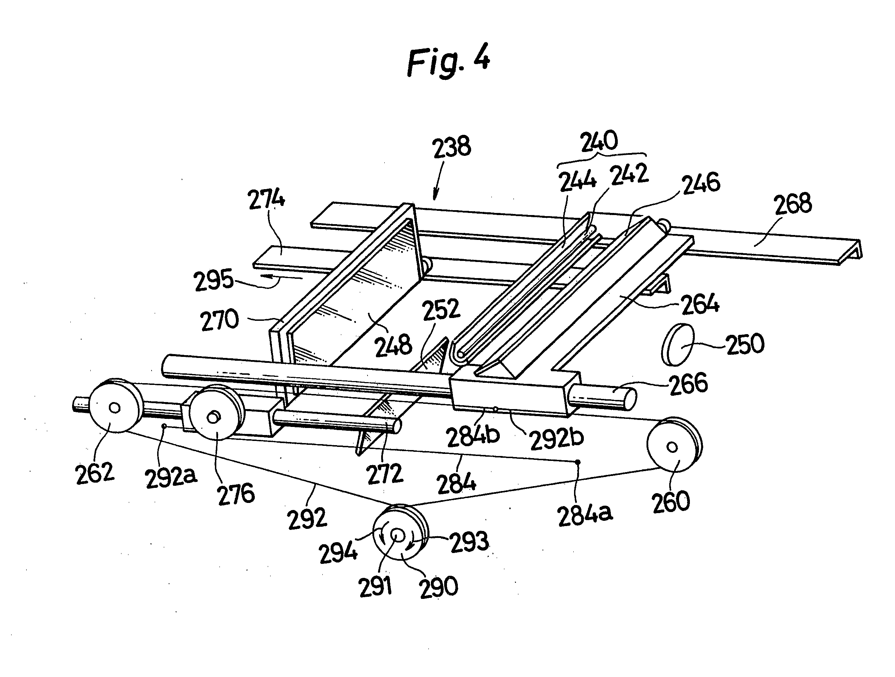

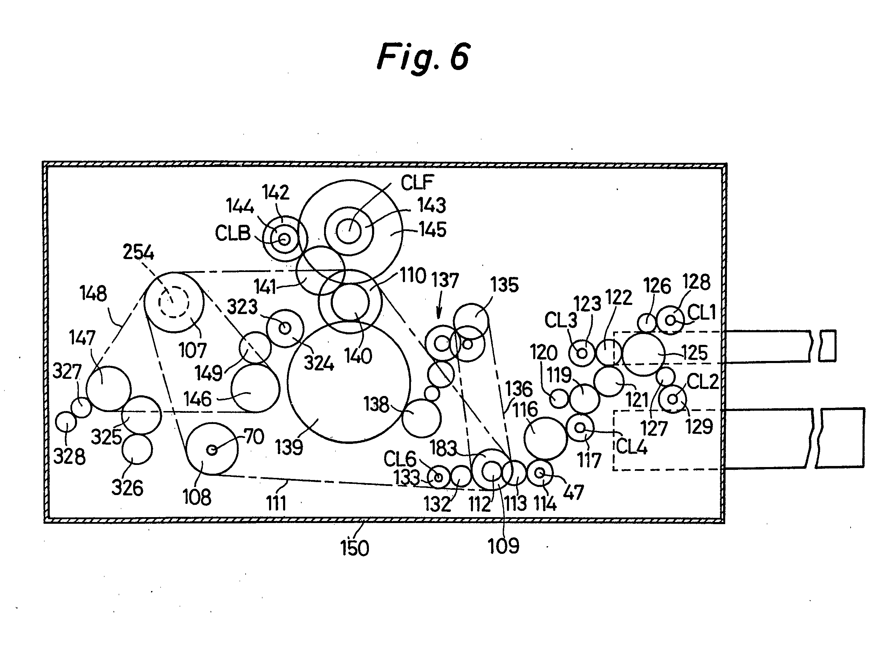

Figure 4 is a simplified perspective view depicting the projector 240, the reflective mirror 246 and the movable reflective mirror 248 as observed from the rear side of the apparatus housing 150. A pulley 290 driven by the motor 254 via a driving means (refer to Figure 6), is rotatably supported by a rotary shaft 291 on the apparatus housing 150. Pulleys 260 and 262 having horizontal axial lines are disposed at a distance to the both sides of the apparatus housing 150. The projector 240 and the reflective mirror 246 are fixed to a supporting means 264. This supporting means 264 is guided and travels horizontally along a pair of guide members 266 and 268. A supporting member 270 which supports the movable reflective mirror 248 is guided and travels horizontally along a pair of guide members 272 and 274. A pulley 276 having a horizontal axial line is supported to the supporting member 270. A wire 292, whose end 292a is fixed to the apparatus housing 150, passes over half round the pulleys 276 and 262, one turn round the pulley 290, half round the pulley 260, and the other end 292b is fixed to the supporting means 264. A wire 284, whose end 284a is fixed to the apparatus housing 150, passes over half round the pulley 276, and the other end 284b is fixed to the supporting means 264.

Accordingly, when the pulley 290 is driven to rotate in the direction of arrow 293, the supporting means 264 for supporting the projector 240 and the reflective mirror 246 are forwardly moved (in the right side in Figure 3), and correspondingly the movable reflective mirror 248 moves in parallel with the direction 295 at a half speed of the supporting means 264. When the pulley 290 is rotated in the direction of arrow 294, the supporting means 264 moves in the backward direction opposite to arrow 295 (in the left side in Figure 3), and correspondingly the movable reflective mirror 248 moves in the same direction at a half speed of the supporting means 264.

Transporting a copy sheet

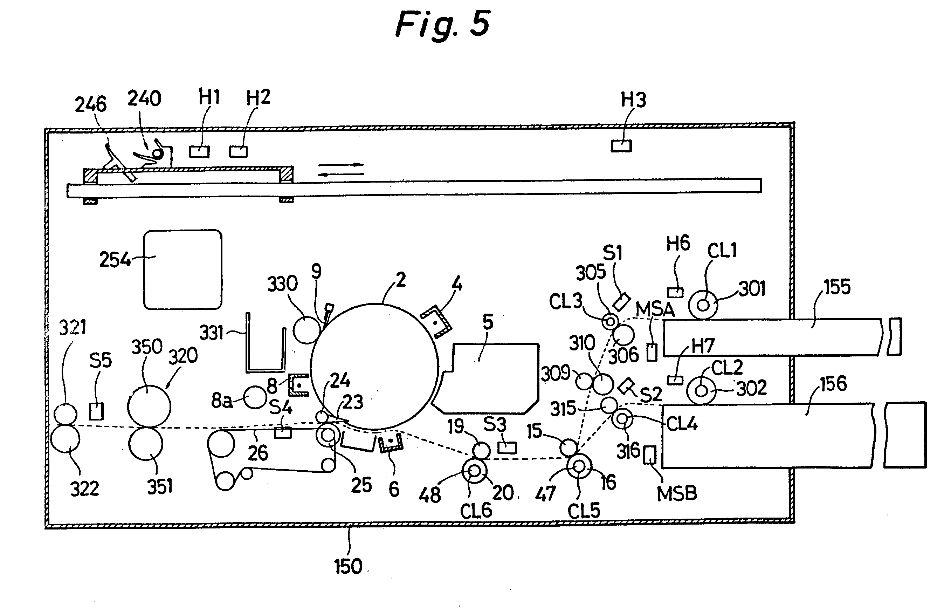

Referring again to Figure 3 and furthermore to Figure 5, the upper and lower cassettes 155 and 156 are detachably supported to the apparatus housing 150, and feeding rollers 301 and 302 are respectively disposed so as to contact with a top sheet of the copy sheets stored in each cassettes 155 and 156. When the upper cassette 155 supplies a copy sheet, the copy sheet carried by the feeding roller 301 is transported from guide plates 303 and 304, transport rollers 305 and 306, guide plates 307 and 308, transport rollers 309 and 310, guide plates 311 and 312 to transport rollers 15 and 16. In the lower cassette 156, a copy sheet carried by the feeding roller 302 is transported through guide plates 313 and 314, transport rollers 315 and 316, guide plates 318 and 319 to transport rollers 15 and 16. In this way, although the copy sheet stored in either of the cassette 155 or 156 is forwarded into a different transport path until the position of the transport rollers 15 and 16, the copy sheet is carried in the common transport path therefrom.

The copy sheet carried by the transport rollers 15 and 16 is transported through guide plates 17 and 18 and carrying rollers 19, 20 to guide plates 21, 22, and advanced so as to come in contact with the photosensitive surface of the drum 2 placed facing to the transfer corona charger 6. After completion of transferring, the side edge of the copy sheet is peeled off from the surface of the drum 2 by means of a peeling click 23, is nipped by peeling rollers 24, 25 and is transported to a fixing device 320 by an endless carriage belt 26. After this fixing device 320 fixes a toner image onto the copy sheet, discharge rollers 321 and 322 feed out the copy sheet reproduced to the copy collection tray 160.

Driving means

Figure 6 is a schematic longitudinal sectional view depicting the driving means. An endless chain 111 passes over a sprocket wheel 107 fixed to the output shaft of the motor 254, a sprocket wheel 108 fixed to a driving shaft 70 of a driving roller 65 (refer to Figure 3) and then over sprocket wheels 109 and 110. A gear 112 is coaxially fixed to the sprocket wheel 109 and meshes with a gear 114 via a gear 113. This gear 114 is connected to a shaft 47 (refer to Figure 5 and Figure 6) of the transport roller 16 via a clutch CL5. The gear 114 is connected to a gear 117 via a gear 116, and the gear 117 is connected to a shaft of the transport roller 316 via a clutch CL4. The gear 117 is connected to a gear 120 fixed to a shaft of a transport roller 310 via a gear 119. The gear 119 is connected to a gear 123 via gears 121 and 122. A gear 123 is connected to a shaft of a transport roller 305 via a clutch CL3. The gear 122 is connected to a gear 128 via gears 125 and 126 and to a gear 129 via gears 125 and 127 respectively. Gears 128 and 129 are respectively connected to a shaft of the feeding roller 301 via a clutch CL1 and to a shaft of the feeding roller 302 via a clutch CL2. A gear 183 is connected to a gear 133 via a gear 132, connected to a shaft 48 (refer to Figure 5) of the carrying roller 20 via a clutch CL6.

A sprocket wheel (not shown) is coaxially provided with a sprocket wheel 109. An endless chain 136 passes over between this sprocket wheel (not shown) and a sprocket wheel 135. A gear (not shown) coaxial with the sprocket wheel 135, is connected to a gear 138 fixed to a shaft of a developing roller in the magnetic brush developing device 5 via a gear train 137 (partly omitted in Figure 6).

A gear 140 coaxial with a sprocket wheel 110, meshes with a gear 139 which is coaxially fixed to a rotary shaft of the photosensitive drum 2. The gear 140 is connected to gears 142 and 143 via a gear 141. The gear 142 is connected to a coaxial gear 144 via a backward clutch CLB. A gear 143 is connected to the aforementioned rotary shaft 291 (refer to Figure 4) via a forward clutch CLF. The rotary shaft 291 is coaxially fitted to a gear 145 which meshes with the gear 144. The clutches CLF and CLB make an exchange of traveling means of optical device (refer to Figure 4) forward and backward. When the clutch CLB is opened, driving force from the gear 141 is transmitted to the rotary shaft 291 via the clutch CLF and the pulley 290 rotates in the direction of arrow 293 (refer to Figure 4). On the other hand, when the clutch CLF is opened, driving force from the gear 141 is transmitted to the rotary shaft 291 via the gear 142, the clutch CLB, the gears 144 and 145. The pulley 290 rotates simultaneously in the direction of arrow 294 (refer to Figure 4).

The endless chain 148 passes over a sprocket wheel (not shown), which is coaxial with the sprocket wheel 107, and then over the sprocket wheels 146 and 147. A gear coaxial with the sprocket wheel 146 is connected to the gear 324 via the gear 149. The gear 324 is fixed to the driving shaft 323 of the magnetic brush cleaning device 13. A gear coaxial with the sprocket wheel 147 is connected to the gear 326 fixed to the shaft of a pressure roller 351 via the gear 325, and is connected to the gear 328 fixed to the shaft of the discharge roller 321 via the gear 327.

Operation timing of the driving means

A detecting switch S1 is provided between the feeding roller 301 and a roller 305, and a detecting switch S2 between the feeding roller 302 and a roller 315. A detecting switch S3 is provided between rollers 15 and 19. A detecting switch S4 is provided downstream of a copy sheet transport direction adjacent to the peeling click 23. A detecting switch S5 is provided between a heat roller 350 and the discharge roller 321. The detecting switches S1 and S2 detect a copy sheet bending upward while the feeding rollers 301 and 302 keep on rotating and two pairs of the transport rollers 305, 306 and 315, 316 terminate rotating. The detecting switches S1 to S5 detect a copy sheet forwarding. Cassette detecting switches MSA and MSB detect respectively the cassettes 155 and 156 which are installed into the apparatus housing 150. The cassettes 155 and 156 are provided corresponding to each size of copy sheets stored therein. The cassette detecting switches MSA and MSB recognize which size of copy sheets is stacked in the cassette 155 or 156 and cause the display lamp 162 or 163 turned on (refer to Figure 2). Detecting switches H6 and H7 detect whether the cassette 155 or 156 is filled with the copy sheets. When they detect all the copy sheets therein being consumed, the display lamp 164 turns on. Detecting switches H1, H2 and H3 detect a moving position of the projector 240. The detecting switch H1 corresponds to a home position of the projector 240, the detecting switch H2 to a exposure commencing position, the detecting switch H3 to a maximum moving position far from a home position of the projector 240.

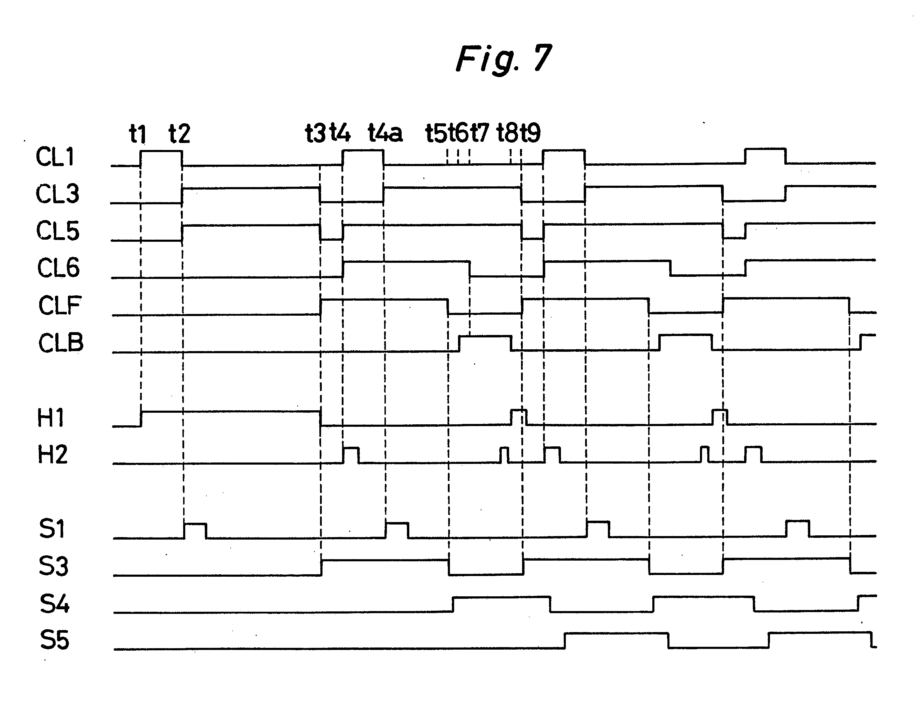

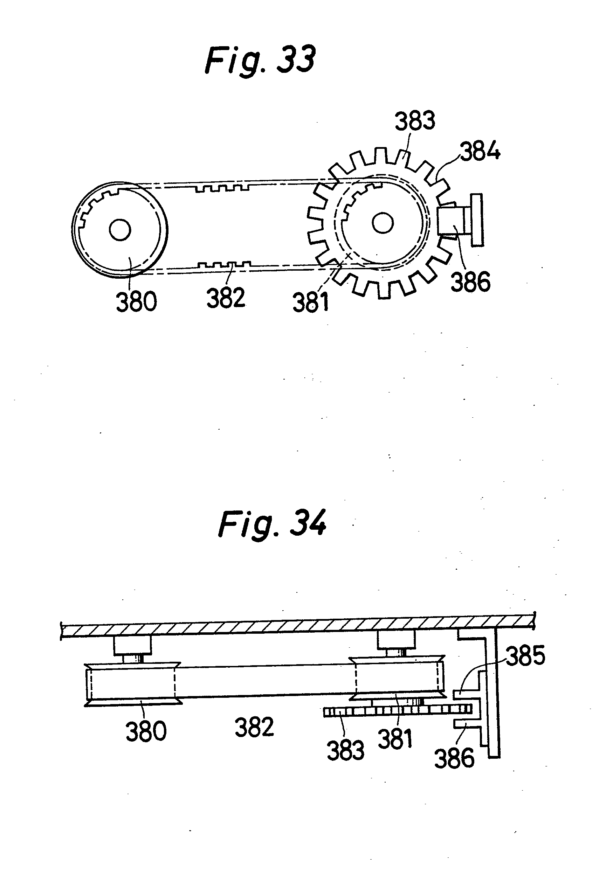

Figure 7 depicts performance wave-form when copying operation is accomplished onto the copy sheet of A4 size stored in the upper cassette 155 which is attached to the apparatus housing 150. The closed or on states of clutches CL1, CL3, CL5, CL6, CLF and CLB correspond to high level, and the opened or off states correspond to low level. The detecting states of detecting switches H1, H2, S1, S3, S4 and S5 correspond to high level, and non-detecting states correspond to low level. Control timing of these copying operation is accomplished by the construction complementally mentioned hereinafter with reference to Figure 33 and Figure 34.

When copying operation is commenced, the projector 240 is at a home position and the detecting switch H1 is high level. A single copy is accomplished when an exposure lamp 242 turns on at time t1, the clutch CL1 is closed, then the feeding roller 301 begins to rotate, and the copy sheet of A4 size is supplied from the upper cassette 155. The detecting switch S1 detects the copy sheet at time t2, and then the clutches CL3 and CL5 are closed, the transport rollers 305, 306 and 15, 16 begin to rotate. When the detecting switch S3 detects the copy sheet at time t3, the clutch CL5 is opened and the transport rollers 15 and 16 stop rotating once. Then the clutch CLF is closed and the projector 240 begins to move in the exposure direction. When the detecting switch H2 detects the projector 240 at time t4, the clutch CL5 is again closed. The clutch CL6 is also closed and the carrying rollers 19 and 20 begin to rotate. The projector 240 moves to the distance for exposure corresponding to a sheet size and terminates at time t5. Then the clutch CLB is closed at time t6 and the projector 240 returns back to the home position. The clutch CL6 is opened at time t7. The detecting switch H1 detects the projector 240 reaching the home position at time t8. Accordingly a single copy is reproduced.

When operation of multiple copies is commenced, the clutch CL1 is closed at time t4, the feeding roller 301 begins to rotate and then a second paper sheet is continually supplied. The detecting switch S1 detects the second sheet at time t4a, and the clutch CL3 is closed for copying the second sheet after the detecting switch S3 detects the copy sheet at time t9. The clutch CLF is closed for copying the second sheet, and the projector 240 moves. Further operation is the same as the single copy operation.

Jam detecting switches S1, S3, S4 and S5 are high level shown in timing pulses of Figure 7 when copying operation is normally accomplished; when a jamming does not yet occur. When the jam detecting switches S1, S3, S4 and S5 detect a copy sheet except these timing pulses shown in Figure 7 and becomes high level, this state means that a jamming occurs. Then the projector 240 and the copy sheet stop moving and the exposure lamp 242 turns off.

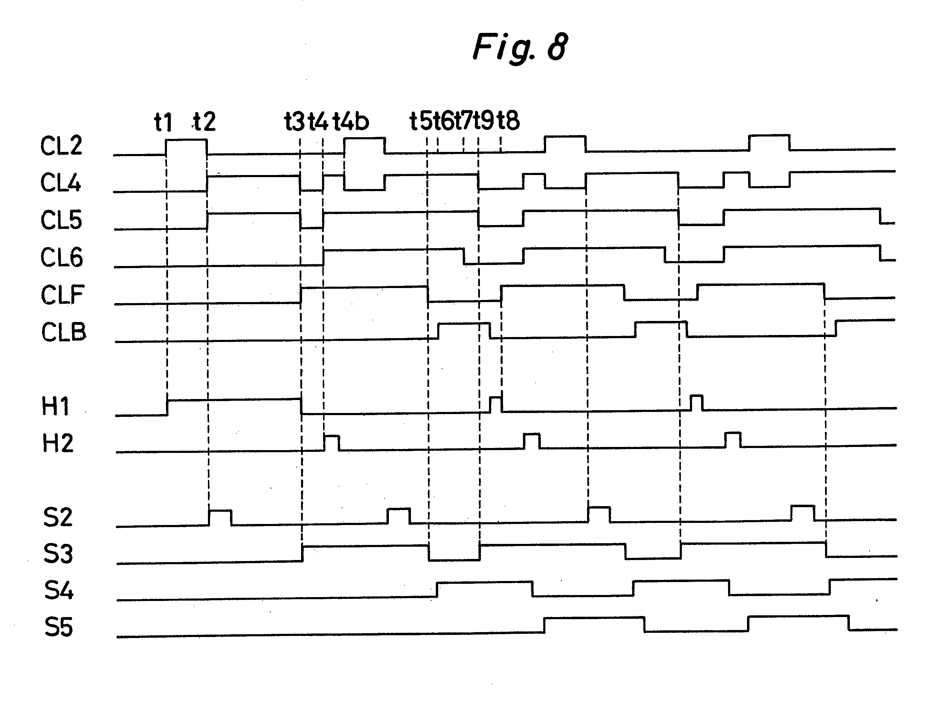

Figure 8 depicts performance wave-form when copying operation is accomplished on the copy sheet of A4 size stored in the bottom cassette 156 attached to the apparatus housing 150. In this case, the clutches CL1 and CL3 shown in Figure 7 correspond to clutches CL2 and CL4 respectively, and the jam detecting switch S1 corresponds to a jam detecting switch S2. Times t1 to t7 shown in Figure 8 correspond to these times in Figure 7 and same operation accomplished. Since the distance of the copy sheet transport path from the feeding roller 302 to the transport rollers 15, 16 is shorter than that of the copy sheet transport path from the feeding roller 301 to the transport rollers 15 and 16, the clutch CL4 corresponding to the clutch CL3 is closed for a period from time t4 to t4b. The copy sheet is substantially transported when the clutch CL4 is closed for this period from t4 to t4b and the transport rollers 315 and 316 rotate. Correspondingly the order of operation of time t8 and t9 in Figure 7 reverses in Figure 8.

According to this embodiment, the moving distance of the projector 240 for exposing i.e. a period that the clutch CLF maintains to be closed, corresponds to a sheet size stored in the cassettes 155 or 156. Therefore exposing times corresponding to different sizes are various. In other words, the projector 240 does not reciprocate from the home position to the maximum moving position in every copying operation. Therefore time required for copying is shortened.

When multiple copies are continually performed, the distance from the trailing edge to the leading edge of a subsequent copy sheet along the transport direction becomes short because a subsequent sheet is supplied at time t4 in Figure 7 or at time t4b in Figure 8. Accordingly time required for copying is shortened.

Release mechanism of paper jamming

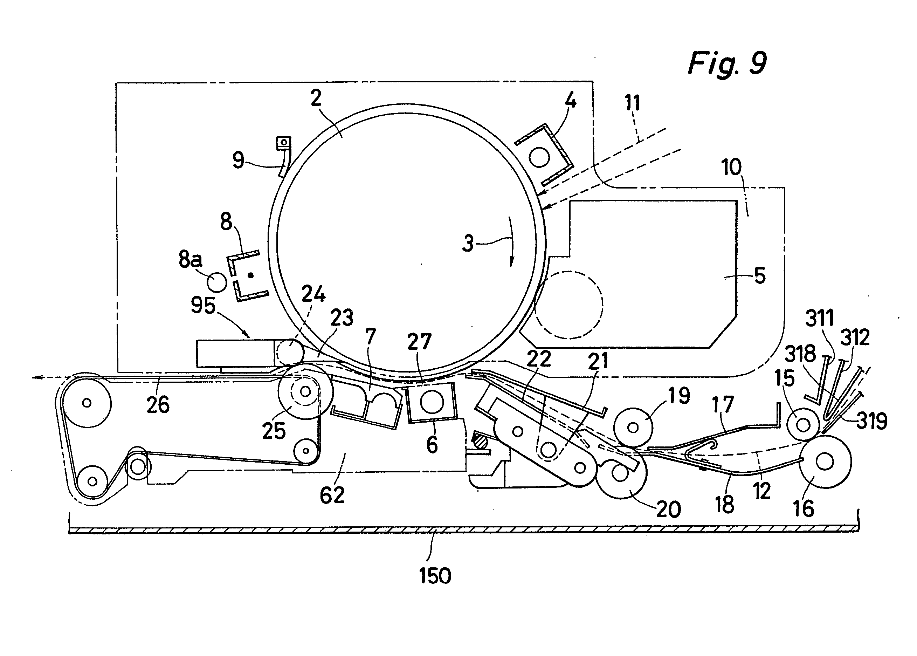

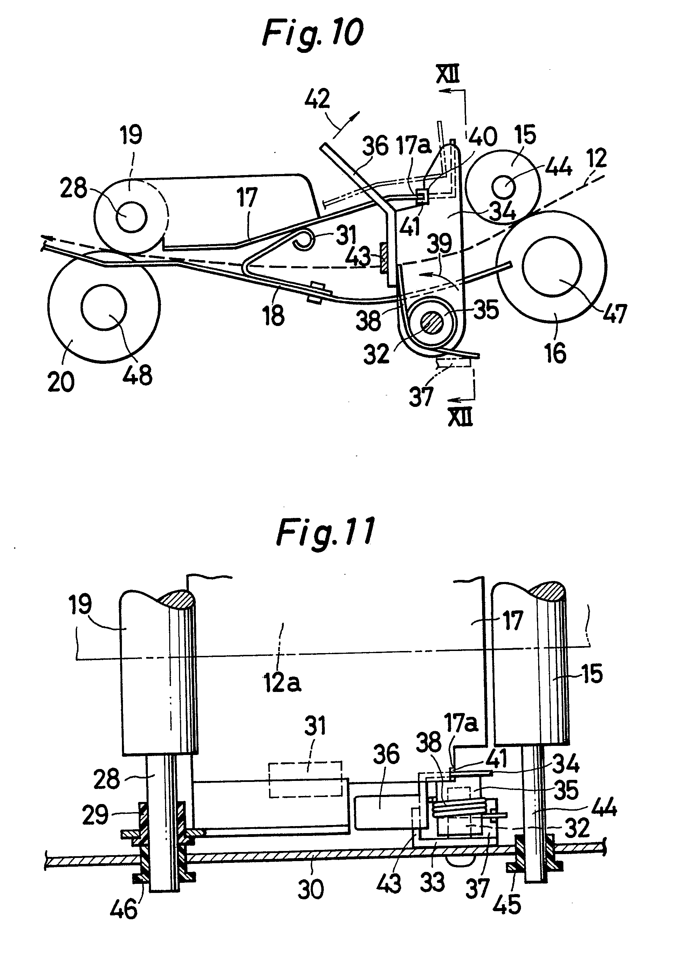

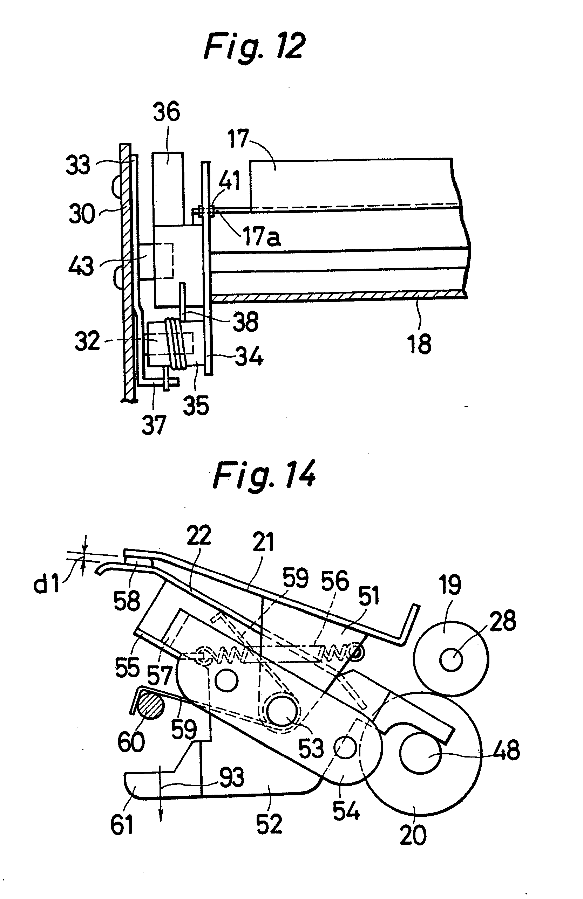

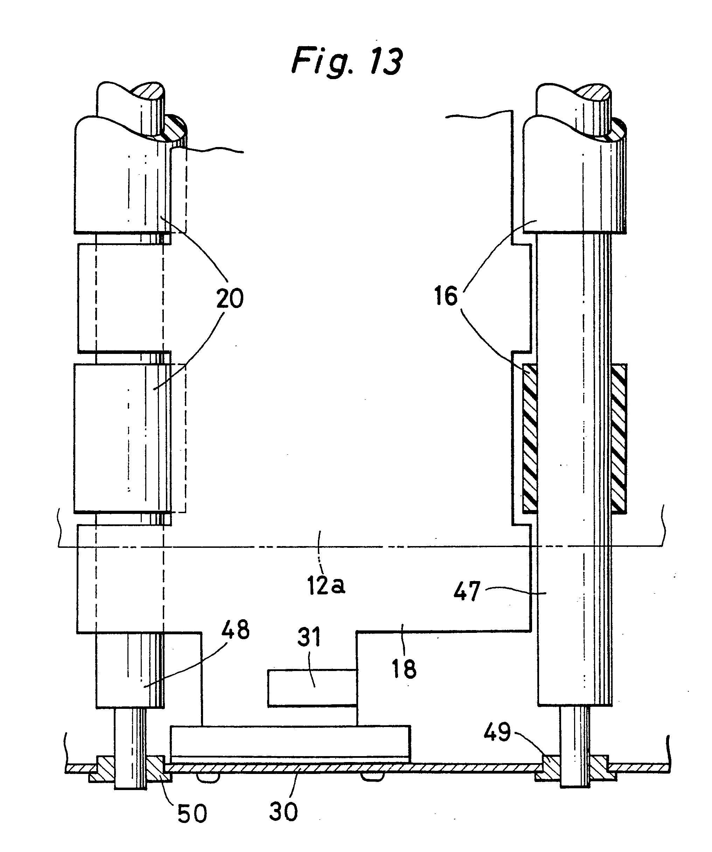

Figure 9 is an enlarged sectional view in the vicinity of the photosensitive drum 2, and Figure 10 is a simplified front view in the vicinity of the top and bottom guide plates 17 and 18, Figure 11 is a plane view of Figure 10, Figure 12 is a schematic longitudinal sectional view taken along the line XII—XII of Figure 10, and Figure 13 is a plane view of the bottom guide plate 18. The top guide plate 17 made of metal material is provided downstream of the copy sheet transport path (the left side in Figure 10) and is supported to a rotary shaft 28 of the carrying roller 19 via a bearing 29 made of synthetic resin material. The bottom guide plate 18 made of electric insulating material is fixed to the front wall 30 and the back wall (not shown) of the apparatus housing 150. The plate spring 31 is provided between the plates 17 and 18. At the upstream side of the copy sheet transport direction (the right side of Figure 10), the end of the top plate 17 is elastically biased so as to be alienated from the bottom plate 18.

A supporting member 33 made of metal and having a horizontal pin 32 is fixed to the front wall 30. An engaging member 34 made of metal for fixing the top plate 17 is supported to the supporting member 33 so as to be biased by the plate spring 31. A boss member 35 of the engaging member 34 is loosely inserted into the pin 32. At the downstream side of the copy sheet transport direction, a lever 36 is disposed. The supporting member 33 has a claw 37 at its lower end. There is provided a torsion spring 38 which surrounds the boss member 35. One end of the torsion spring 38 abuts against the lever 36, and the other end abuts against the claw 37. The engaging member 34 is biased around the pin 32 by the torsion spring 38 in the direction of arrow 39 (refer to Figure 10). The engaging member 34 has a notch 40 upstream in the copy sheet transport direction. A bushing 41 made of synthetic resin is fixed to the notch 40. The end 17a of the top guide plate 17 is engaged with the notch 40 of the engaging member 34 via the bushing 41.

Therefore the top guide plate 17 is supported to retain an adequate distance between the bottom guide plate 18 against the force of the plate spring 31.

The lever 36 of the engaging member 34 is swung in the direction of arrow 42 (refer to Figure 10) against the force of the torsion spring 38. Then the end 17a of the top guide plate 17 is disengaged from the bushing 41, and the top guide plate 17 is upwardly raised by means of the plate spring 31 as depicted by dots-and-dash line in Figure 10. When the copy sheet is jammed between the plates 17 and 18, it is easily removed therefrom. The supporting member 33 is provided with a hindering portion 43 which abuts against the engaging member 34 upstream in the copy sheet transport direction and prevents the top guide plate 17 from excessive movement so that the top guide plate 17 is not bended by the torsion spring 38.

The transport roller 15 and the carrying roller 19 are made of metal material, whose rotary shafts 44 and 28 are respectively supported to the front wall 30 and the back wall via bearing 45 and 46 made of synthetic resin material. The transport roller 16 and the carrying roller 20 made of synthetic resin material are mounted in parallel with the rotary shafts 47 and 48 made of metal material at a diatance. The rotary shafts 47 and 48 are respectively supported to the front wall 30 and the back wall via bearings 49 and 50. The rotary shafts 47 and 48 are driven to rotate by means of the driving means (not shown). When the transport roller 15 and the carrying roller 19 cooperate with the transport roller 16 and the carrying roller 20 simultaneously. The bearings 45 and 46 of the rotary shafts 44 and 28 are loosely inserted into the elongated holes (not shown) on the front wall 30 and the back wall, and are elastically biased toward the side of bearings 49 and 50 by a spring (not shown). Therefore the transport roller 15 and the carrying roller 19 are in contact with the transport roller 16 and the carrying roller 20, and cooperate with the registration rollers 16 and 20.

In this way, the transport rollers 15 and 16 which is in contact with a copy sheet 12a indicated by dots-and-dash line in Figure 11 and Figure 13, the carrying rollers 19, 20 and the top and bottom guide plates 17, 18 are electrically insulated with respect to the apparatus housing 150. The top and bottom guide plates 17, 18 are easily to be released so that a jammed paper is removed easily.

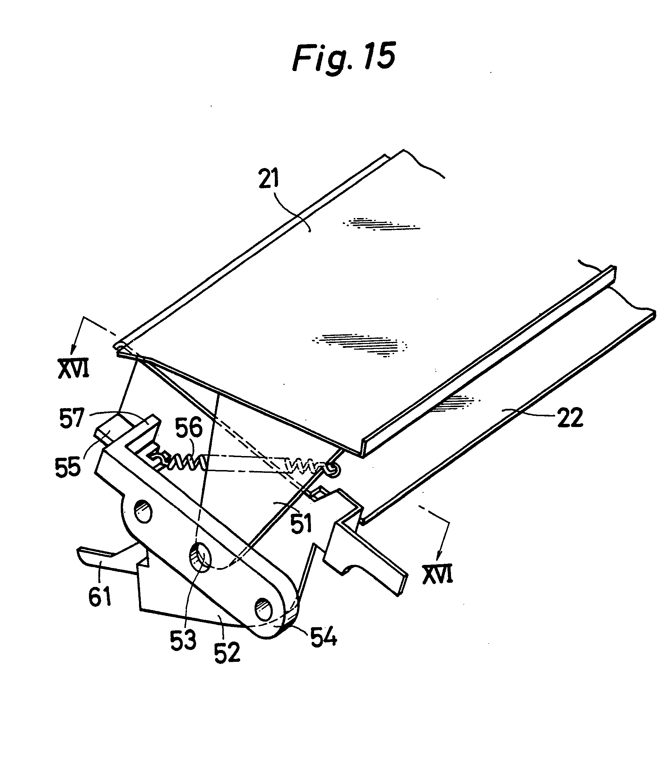

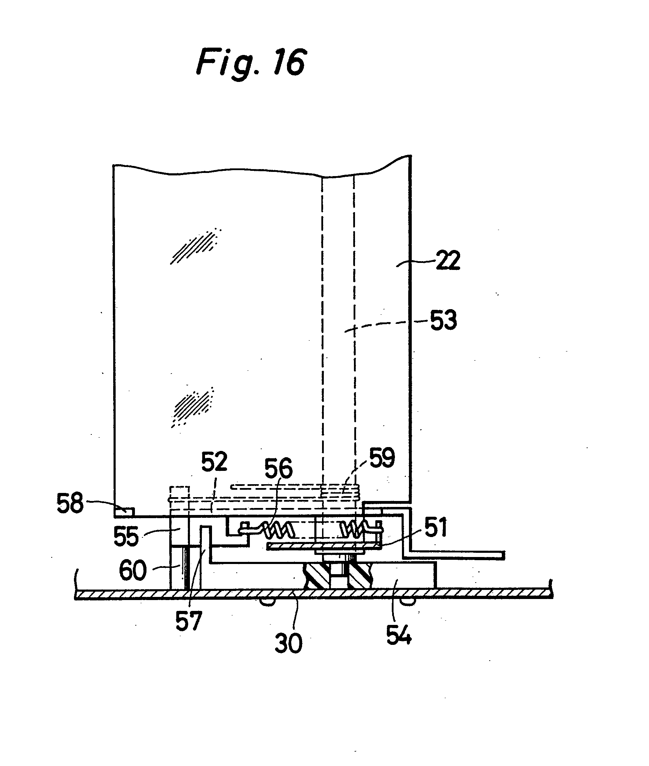

Figure 14 is a front view in the vicinity of the top and bottom guide plates 21 and 22. Figure 15 is a perspective view of Figure 14. Figure 16 is a longitudinal sectional view taken along the line XVI—XVI of Figure 15. The top guide plate 21 and the bottom guide plate 22 are consisted of metal material. The supporting members 51 and 52, extending downwardly, are respectively fixed to the both ends of the top and bottom guide plates 21 and 22 along the copy sheet transport direction. There is provided the shaft 53 which extends in the forward and backward direction of the apparatus housing 150 (in the longitudinal direction in Figure 16) and is loosely inserted to the supporting members 51 and 52. Both ends of the shaft 53 are supported by a receiving member 54 made of synthetic resin fixed to the front wall 30 and the back wall. The width of the top guide plate 21 is longer than that of the bottom guide plate 22 so that the transversely disposing ends of the top guide plate 21 are engaged with engaging members 57 of the receiving member 54 downstream in the copy sheet transport direction when the top guide plate 21 swings around the shaft 53.

At the downstream side of the transport direction of the supporting member 52, there is provided a receiving click 55 outwardly projecting. One end of a spring 56 is connected to the receiving click 55, and the other end of the spring 56 is connected to the supporting member 51. The top and bottom guide plates 21 and 22 are biased by the spring 56 so as to get closer each other downstream in the copy sheet transport direction. One end of the bottom guide plate 22 placed at the downstream side of the copy sheet transport direction has a projection 58 longitudinally projecting, and the distance "d1" (refer to Figure 14) is spaced to advance a copy sheet when the under side of the top guide plate 21 abuts against the projection 58. There is provided a torsion spring 59 which surrounds the shaft 53. One end of the torsion spring 59 contacts with the bottom guide plate 22, and the other end contacts with a horizontal pin 60 projecting on the front wall 30 beneath the bottom guide plate 22. The bottom guide plate 22 is repulsively biased clockwise around the shaft 53 as Figure 14. An engaging member 57 of the supporting member 52 which engages with the receiving click 55 of the receiving member 54 are composed so as to prevent the supporting member 52 from excessive movement. At the lower end of the supporting member 52, a contact portion 61 is formed under the pin 60. A contact portion 63 of a frame 62 contacts with the contact portion 61 and is biased downwardly. The bottom guide plate 22 and the top guide plate 21 are swung around the shaft 53 in the counterclockwise direction of Figure 14.

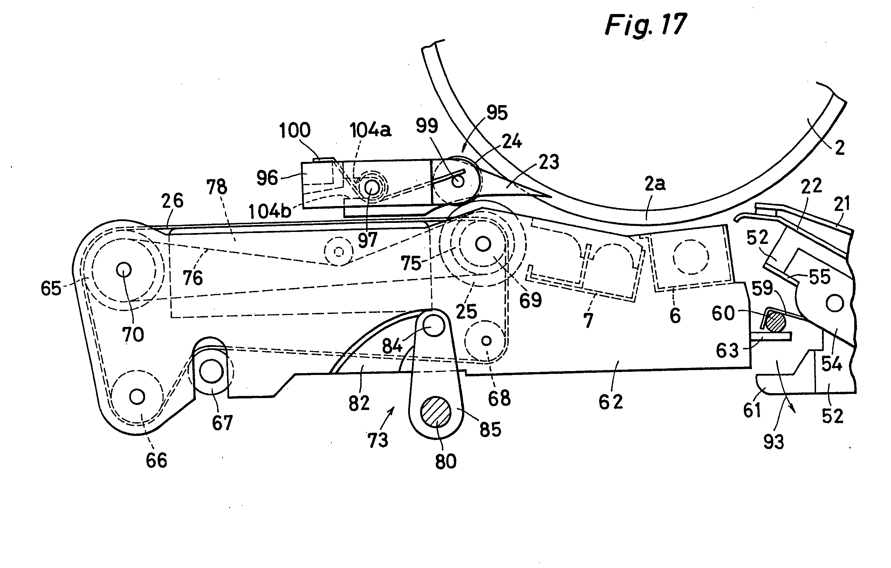

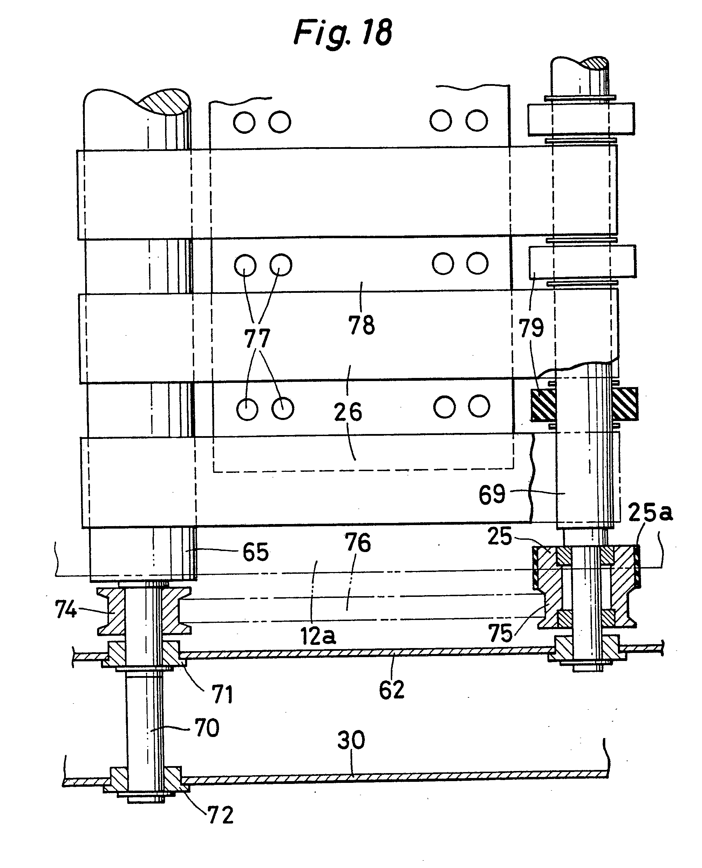

Figure 17 is a schematic front view in the vicinity of the peeling member 95 and a carriage belt 26 as omitted the front wall 30 shown in Figure 9. Figure 18 is a schematic plane view of Figure 17 as omitted the peeling member 95. A plurality of carriage belts 26 made of rubber material are arranged at regular intervals forward and backward of the apparatus housing 150 (in the longitudinal direction of Figure 18), and are trained around a driving roller 65, a roller 66, a tension roller 67, and rollers 68 and 69. These rollers 65 to 69 are supported on a frame 62 provided at the inner side with respect to the front wall 30 and the back wall. A driving shaft 70 of the driving roller 65 penetrates through the frame 62 via a bearing 71, and is supported to the front wall 30 and the back wall respectively via bearings 72. Therefore the frame 62 is supported by the driving shaft 70, and the state of Figure 17 is maintained by means of the supporting member 73. The transfer corona charger 6 and the corona charger 7 for separation of copy sheets are fixedly mounted to the frame 62. The driving shaft 70 is driven to rotate by the driving means (not shown).

A pulley 74 is fixed to the driving shaft 70, and a peeling roller 25, whose surface is coated with a rubber 25a, is rotatably disposed to the roller 69. The peeling roller 25 has a pulley portion 75, and a timing belt 76 passes over around the pulley 74 and the pulley portion 75 as shown by dots-and-dash line. The peripheral speed of the peeling rollers 24 and 25 nipping the copy sheet is equal to the transferring speed of the copy sheet, and the speed of the carriage belt 26 is a little faster than that of the peeling rollers 24 and 25 to prevent the sheet on the transport path from being bent or jammed.

Referring to Figure 18, there is mounted a suction box 78 having a plurality of holes 77 facing upwardly between carriage belts 26 inside the frame 62, and inducement fan (not shown) is detachably connected to the suction box 78. A transferring copy sheet is allowed to adhere closely and fixedly to the carriage belt 26 by sucting air through the holes 77 into the suction box 78.

A plurality of separate rollers 79 made of synthetic resin material are coaxially mounted around the roller 69 at intervals in axial direction.

Since the periphery of the peeling roller 25, the separate roller 79 and the carriage belt 26 which contact with the copy sheet 12a as shown by a dots-and-dash line as Figure 18 are made of electrical insulating material, the copy sheet 12a is electrically insulated from the apparatus housing 150.

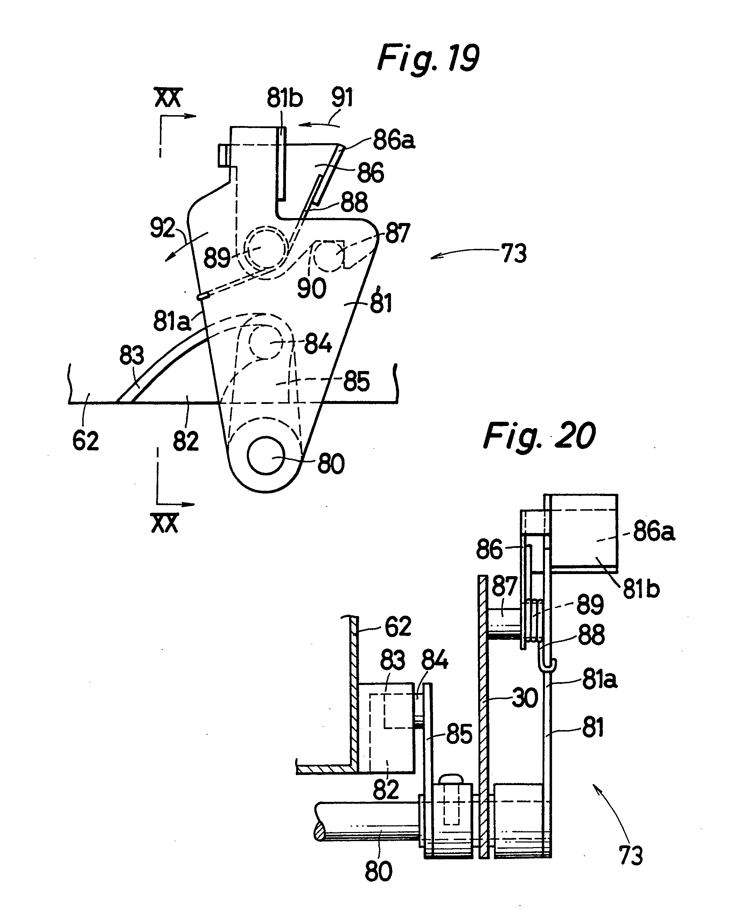

Figure 19 is a front view of the supporting member 73 as omitted the front wall 30. Figure 20 is a schematic sectional view taken along the line XX—XX of Figure 19. The supporting member 73 comprises a horizontal rotary shaft 80 rotatably penetrated from the front wall 30 to the back wall, a lever 81 fixed to the end of the rotary shaft 80, a guide member 83 made of synthetic resin material having a guide groove 82 which is diagonally curved upstream in the copy sheet transport direction and fixed to the frame 62, an engaging member 85 having a projecting portion 84 engaged with the guide groove 82 and fixed to the rotary shaft 80, a release lever 86 having a horizontal axial line and supported swingably to the lever 81, an engaging member 87 projecting to the front wall 30, a torsion spring 88 by which the release lever 86 is biased so as to engage with the engaging member 87. The lever 81 is provided with a horizontal shaft 89 to which the release lever 86 is rotatably mounted. The engaging member 87 is arranged to the front wall 30 on the opposite side with respect to the guide member 83. The release lever 86 has an engaging portion 90 so as to engage with the engaging member 87. The torsion spring 88 surrounds the shaft 89, and its one end is linked to a knob 81a of the lever 81 at the downstream side of the copy sheet transport direction and the other end abuts against a knobbed member 86a on the end of the release lever 86 at the upstream side of the copy sheet transport direction. The release lever 86 is biased clockwise around the shaft 89 so as to engage with the engaging member 87 by the torsion spring 88 as Figure 19.

The frame 62 is supported by the driving shaft 70, and is given the torque and inclines to swing around the driving shaft 70 clockwise by their own weight of the frame 62 and its attachments as Figure 17. Therefore the frame 62 is horizontally maintained because the projecting portion 84 of the engaging member 85 is arranged to the top portion of the guide groove 82. In the event of a jamming in the copy sheet transport path 12, the release lever 86 is swung around the shaft 89 in the direction of arrow 91 with a knobbed member 86a of the release lever 86 to make the frame 62 opened downwardly. An engaging portion 90 is disengaged from the engaging member 87, repelling the torque exerted by the torsion spring 88. The lever 81 is swung around the rotary shaft 80 in the direction of arrow 92 when the knobbed member 86a abuts against a knob 81b of the lever 81. Accordingly, the engaging member 85 is moved along the guide groove 82 in the direction of arrow 92 via the rotary shaft 80, and the boss 84 is disengaged from the guide groove 82. Since the support member of the frame 62 is consequently disengaged, the frame 62 is downwardly opened by clockwise movement around the driving shaft 70 as Figure 17. Therefore the jammed sheet is easily taken away from the copy sheet transport path 12.

The peeling roller 24 installed into the retaining means 10 is in contact with another peeling roller 25 on the frame 62 except that the frame 62 is downwardly swung. Even though a jamming occurs on the copy sheet transport path 12, the retaining means 10 for supporting the photosensitive drum 2 does not allow to be drawn out of the apparatus housing 150 except that the frame 62 is downwardly swung and the copy sheet transport path 12 is released. Therefore since the photosensitive drum 2 is drawn out of the apparatus housing 150 in the event of the jamming, the photosensitive drum 2 is prevented from being wounded by a jammed sheet. The upper end of the frame 62 may be extended to the under side portion of the retaining means 10 so that the retaining means 10 can not be drawn out without downward movement of the frame 62.

At the upstream side of the copy sheet transport direction, the contact member 63 arranged to the end of the frame 62 abuts with the contact portion 61 of the supporting member 52 in response to downward movement of the frame 62, and the contact portion 61 is biased toward the direction of arrow 93 (refer to Figure 17). Referring again to Figure 14, when the contact member 63 abuts against the contact portion 61, the supporting member 52 and the bottom guide plate 22 are swung counterclockwise around the shaft 53 as Figure 14, repelling the torque of the spring 59. Since the top guide plate 21 is downwardly swung so as to abut against the engaging member 57 of the receiving member 54, excessive movement of the top guide plate 21 is prevented. When the bottom guide plate 22 is swung counterclockwise as Figure 14, the space between the top and bottom guide plates 21 and 22 is extended. Accordingly a jammed sheet is easily taken away.

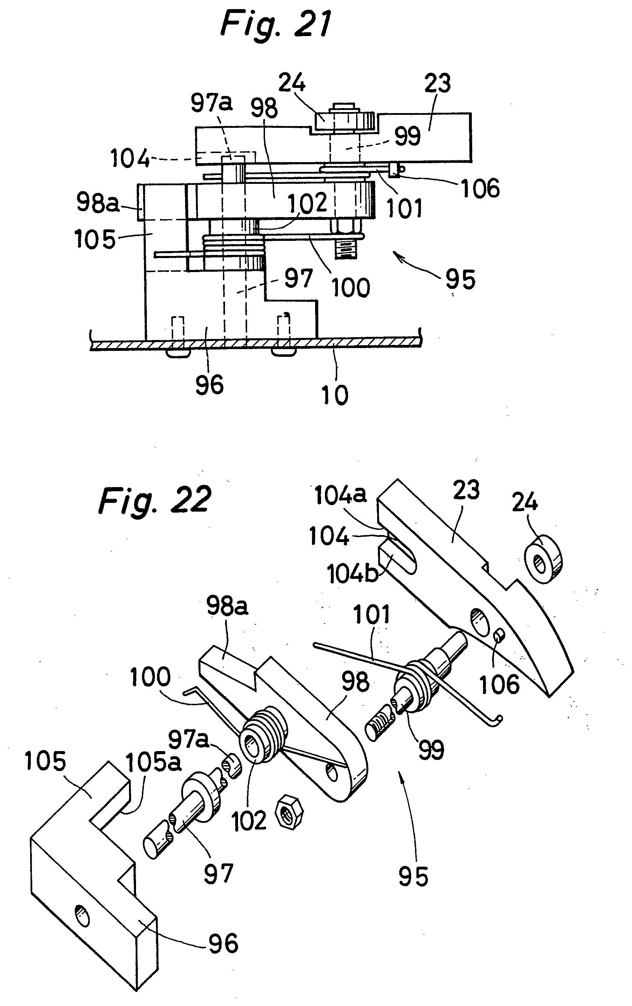

Figure 21 is a plane view of the peeling member 95, and Figure 22 is a perspective fragmentary view of Figure 21. The peeling member 95 comprises a fixing member 96 made of synthetic resin fixed to the retaining means 10, a horizontal pin 97 supported rotatably to the fixing member 96, a retaining member 98 supported to the pin 97, a horizontal pin 99 supported rotatably to the retaining member 98, a peeling click 23 supported rotatably to the pin 99, the peeling roller 24 supported rotatably to the pin 99, a torsion spring 100 exerting a torque on the pin 99 around the pin 97 in the clockwise direction as Figure 17, and another torsion spring 101 exerting a torque on the peeling click 23 around the pin 99 in the counterclockwise direction as Figure 17. Pins 97 and 99 are made of metal material. The fixing member 96, the retaining member 98 and the peeling click 23 are made of synthetic resin material.

The pin 97 penetrates through a boss portion 102 of the retaining member 98, and a free end 97a is engaged with a depression 104 on the end of the peeling click 23 at the downstream side of the copy sheet transport direction. The torsion spring 100 surrounds the boss portion 102. One end of the spring 100 is linked to the top portion of the engaging member 105 of the fixing member 96, and the other to the top portion of the pin 99 penetrating through the supporting member 98. The pin 99 penetrates through the peeling click 23, and the peeling roller 24 is supported to the other end of the pin 99. Therefore the peeling roller 24 is biased against the bottom peeling roller 25 by the torsion spring 100.

The torsion spring 101 surrounds the pin 99, one end of which is linked to the bottom portion of the pin 97, the other to the projecting portion 106 protruding on the peeling click 23. The peeling click 23 is biased counterclockwise around the pin 99 as shown in Figure 17. A depression 104 of the peeling click 23 is engaged with the end 97a of the pin 97, and thus the peeling click 23 is allowed to swing from an upper surface 104a to a lower surface 104b of the depression 104.

Assume that a jamming occurs when a copy sheet is nipped between notches 2a arranged with the circumferential ends of the photosensitive drum 2 and the peeling click 23. The frame 62 is released downwardly as noted above, and disengage the peeling roller 24 from another peeling roller 25. The peeling click 23 is biased clockwise by the torsion spring 100 as shown by arrow 115 until the contact portion 98a of the retaining member 98 abuts against the bottom side 105a of the engaging member 105. The peeling click 23 is biased counterclockwise around the pin 99 by the torsion spring 101 as shown by arrow 118 until the upper side 104a of the depression 104 abuts against the pin 97. Generally since the distance $\delta$ between the surface of the photosensitive drum 2 and the peeling click 23 in association with the notch 2a is extended, the jammed sheet is easily taken out of the apparatus housing 150.

According to this embodiment of this invention, since members which abut against any sheet partly transported along the transport path in transferring area are completely insulated from the apparatus housing 150, electric charge given to the copy sheet is prevented from escaping through the apparatus housing 150. Therefore copy operation is generally accomplished without regard to electric resistance of copy sheets.

Magnetic brush cleaning device 13

Referring again to Figure 3, the developing material such as one-component magnetic toner remaining on the photosensitive surface of the drum 2 after the transferring step is erased by the erasing corona charger 8 and the charge erasing lamp 8a, and is cleaned by the cleaning device 13. The magnetic brush cleaning device 13 comprises a permanent magnet bar 330 parallel with the photosensitive drum 2 and the sump 331. The outer periphery of the permanent magnet bar 330 circumferentially has a plurality of alternate magnetic poles at predetermined intervals. In this embodiment the magnet bar 330 has eightpole. Residual toner particles remaining on the photosensitive drum 2 is attracted to the permanent magnet bar 330, and drop into the sump 331 through the opening 333 via a responsive plate 332 and is stored.

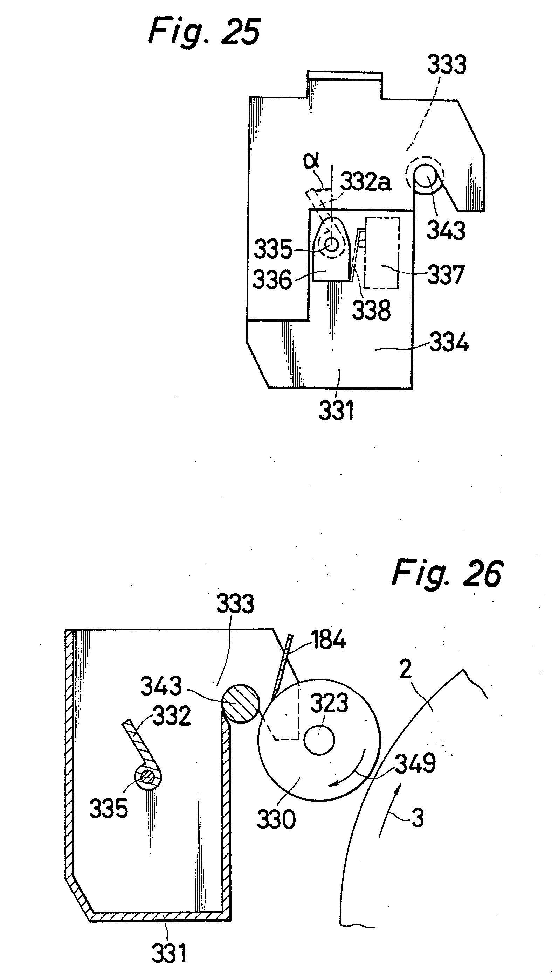

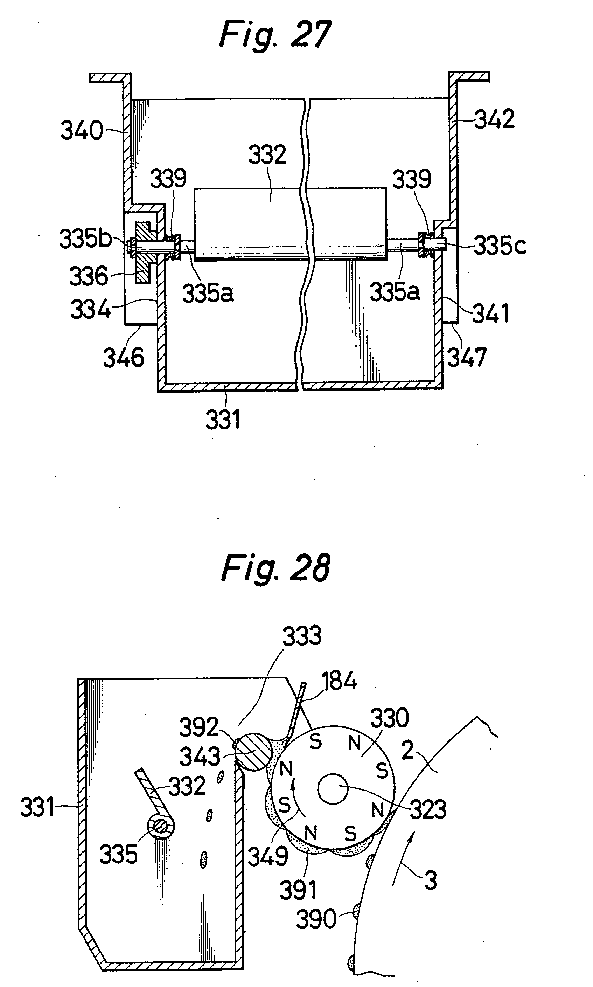

Figure 24 is a perspective fragmentary view of the sump 331. Figure 25 is a left side view of Figure 24. Figure 26 is a simplified overall view of the cleaning device 13 including a sectional view taken along the line XXVI—XXVI of Figure 24. Figure 27 is a sectional view taken along the line XXVII—XXVII of Figure 24. The sump 331 made of synthetic resin material such as acryl resin is moulded out of plastic operation. The opening 333 of this sump 331 elongates along the axial line of the photosensitive drum 2 when it is disposed in the apparatus housing 150. The left end of the sump 331 as shown in Figure 24 has a recess 344 extending along the axial direction of the sump 331 (the right of the Figure 24) adjacent to the photosensitive drum 2. The sump 331 is pivotally supported to a shaft 335. The shaft 335 has an axial line extending along the opening 333 (i.e. the longitudinal direction of the sump 331). The shaft 335 comprises an elongating portion 335a along the entire longer side of the sump 331 and an end 335b projecting out of the sump 331. The portion 335a of the shaft 335 placed inside of the sump 331 is fixed to the responsive plate 332, made of acryl resin, which extends centrifugally from the shaft 335. This responsive plate 332 elongates over the whole length of the opening 333 in the sump 331. The end 335b of the shaft 335 projects outwardly from the sump 331 on the recess 334 of the sump 331. The operating plate 336 is fixed to this projecting end 335b. When toner particles are not in contact with the responsive plate 332, the operating plate 336 abuts against an actuator 338 of the micro switch 337, and the angle between the responsive plate 332 and the perpendicular line (refer to Figure 25) is $\alpha$. This angle $\alpha$ means that toner particles getting on the upper side 332a of the responsive plate 332 facing to the opening 333 begin to slide.

An oil sealing member 339 is disposed at the portion where the shaft 335 penetrates through the sump 331 so as to prevent toner particles from escaping out of the sump 331. The operating plate 336 arranged to the recess 334 does not project over the end surface 340 of the sump 331. Therefore the operating plate 336 is prevented from contacting with the apparatus housing 150 when the sump 331 is drawn thereout. The sump 331 has a depression 341 at the other end. The other end 335c of the shaft 335 projects to a recess 341 of the sump 331. The end surface 335c does not project over the end surface 342 of the sump 331 to prevent the end 335c of the shaft 335 from contacting with the apparatus housing 150.

A stay 343 as a transport member having a cylindrical form, made of magnetic permeable member such as rigid steel, is fixed to the apparatus housing 150 in parallel with the axis of the photosensitive drum 2. Engaging members 344 and 345 on the top portion of the sump 331 engages with the stay 343 from the upper side. The protrudent surface 346, facing downwardly and formed between the end surface 340 and the recess 334 and another protrudent surface 347, facing downwardly and formed between the end surface 342 and the recess 341 are respectively supported to the apparatus housing 150. As noted above, the sump 331 is installed into the apparatus housing 150. A micro switch 337 is fixedly mounted to the apparatus housing 150 so as to place at the above-mentioned recess 334 when the sump 331 is arranged thereto. The actuator 338 of the micro switch 337 opposites to a side portion 336a of the operating member 336 adjacent to the photosensitive drum 2. The protrudent surface 348, facing to the photosensitive drum 2 and formed between the end surface 340 and the recess 334 prevents the operating member 336 from excessive clockwise movement as shown in Figure 24 to Figure 26.

Toner particles drop into the sump 331 through the opening 333. When they are stored higher than the shaft 335, stored toner particles press down an upper side 332a of the responsive plate 332. Therefore the shaft 335 is biased counterclockwise as shown in Figure 24 to Figure 26. The operating member 336 presses the actuator 338. Then the micro switch 337 is closed, and it is apparently alarmed that a large quantity of toner particles are stored in the sump 331 by means of turning on the lamp. When the alarm is occured, the sump 331 is drawn out after making the apparatus housing 150 open and damp storage of toner particles therefrom.

A driving shaft 323 made of stainless steel is fixedly inserted into the permanent magnet bar 330. Therefore the driving shaft 323 is coaxially driven to rotate.

Figure 28 depicts steps in which toner particles are attracted and adhere to the photosensitive drum 2 by means of the permanent magnet bar 330, and then drop into the sump 331 through the opening 333 thereof. The photosensitive drum 2 rotates with the speed of 40 rpm in the direction of arrow 3. On the other hand, the permanent magnet bar 330 is driven to rotate with the speed of 200 to 300 rpm in the opposite direction to the rotation of the photosensitive drum 2 as shown by arrow 349. After completion of transferring operation, residual toner particles remaining on the surface of the photosensitive drum 2 are referred to as a reference numeral 390. Toner particles 390 adhering to the surface of the permanent magnet bar 330 by means of magnetic force become magnetic brushes 391. The magnetic brushes 391 adhering thereto are advanced to the sump 331 with rotation of the magnetic bar 330 in the direction of arrow 349. Toner particles 391 adhering to the permanent magnet bar 330 are removed therefrom by a blade 184 fixed to the apparatus housing 150 and are attracted to the outer periphery of the stay 343 made of magnetic permeable member. Toner particles 392 adhering to the stay 343 drop into the sump 331 through the opening 333 when the permanent magnet bar 330 rotates in the direction of arrow 349.

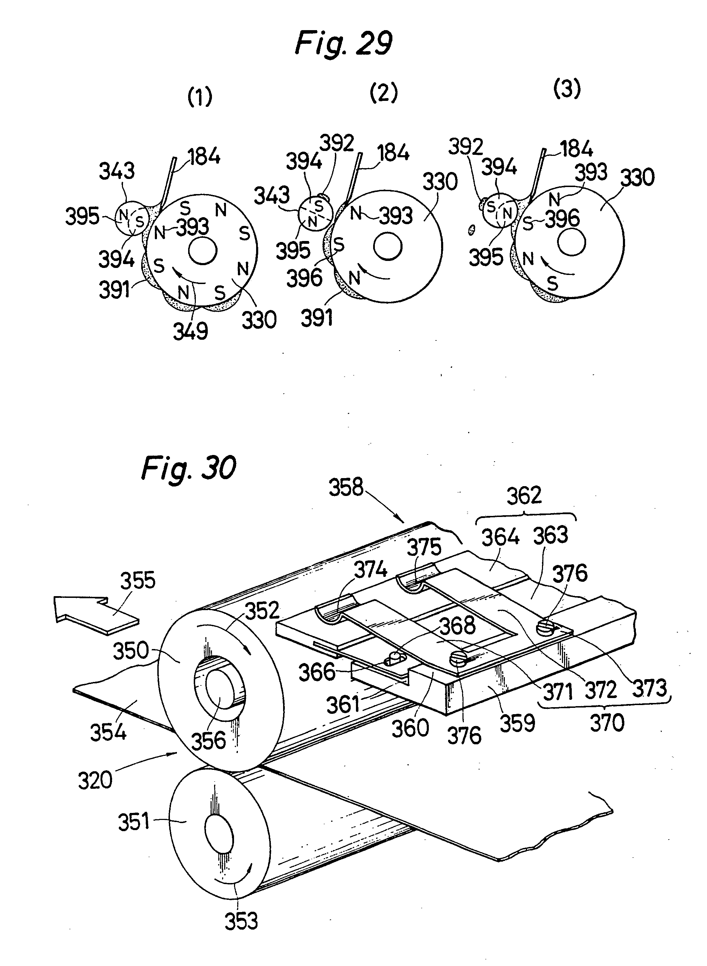

Inventors of this invention investigate the reason why toner particles 392 drop into the sump 331 from the surface of the stay 343 as follows. Referring to Figure 29 (1), the magnetic S-pole 394 is formed on the position of the stay 343 near the magnetic N-pole 395 of the permanent magnet bar 330, and the magnetic N-pole 395 is formed on the opposite side portion of the stay 343. The vicinity of the magnetic N-pole 395 of the permanent magnet bar 330 has high density of a magnetic area. The magnetic S-pole 394 of the stay 343 has a smaller magnetic area than that of the magnetic N-pole 395.

When the permanent magnet bar 330 rotates in the direction of arrow 349, the polarity of the stay 343 alternates as shown in Figure 29 (2). Sequentially toner particles 392 adhering to the surface of the stay 343 advance to the sump 331 with the movement of the polarities 394 and 395 formed on the stay 343.

When the permanent magnet bar 330 further rotates as shown in Figure 29 (3) and the magnetic S-pole 396 faces the stay 343, the magnetic area of the magnetic N-pole 395 on the stay 343 is smaller than that of the magnetic S-pole 394. At the S-pole 394 having the larger magnetic area, magnetic attractive force per unit area of the outer periphery of the stay 343 becomes weak. Therefore, toner particles 392 on the magnetic S-pole remove from the stay 343 by their own weight and drop into the sump 331. Toner particles 392 have a tendency to remove from the stay 343 by their inertial force exerted by the rotation of the permanent magnet bar 330.

According to the embodiment as aforementioned, arrangement of the blade 184 facilitates substantially removal of residual toner particles. Friction between the blade 184 and the permanent magnet bar 330 serves to remain residual toner particles once and to move remaining toner particles to the stay 343. Therefore there is no need to form a magnetic brush of residual toner particles on the surface of the permanent magnet bar 330 and remove them therefrom. According to another aspect of the invention, there is no need to provide the blade 184.

According to a further embodiment, dual-component developing material alternating with one-component developing material is applied over the surface of the photosensitive drum 2.

According to a still further embodiment, the outer periphery of the rotating permanent magnet bar 330 is covered with a sleeve made of magnetic impervious member such as aluminum or stainless steel, and is fixedly mounted to the apparatus housing 150. Its outer periphery may be adherently covered with a tube made of synthetic resin material. The outer periphery may be coated with plastic paint so as to serve for removal of residual toner particles from the permanent magnet bar 330 to the stay 343. Since residual toner particles 391 are electrically insulated from the permanent magnet bar 330 by the synthetic resin layers, they have a tendency to be attracted by the stay 343 despite an electrostatic force.

A magnetic field may be formed by an electromagnet alternating with the permanent magnet bar 330.

Fixing device 320

Figure 30 is a simplified perspective view of the fixing device 320. A heat roller 350 and a pressure roller 351 are disposed up and down respectively. The pressure roller 351 is rotated in the direction of arrow 353 and the heat roller 350 cooperates with revolution of the pressure roller 351 in the direction of arrow 352. Accordingly a copy sheet 354 is forwarded to a transport path 355 by means of these rollers 350 and 351. A heater element 356 is supported in the heat roller 350, and extends along the entire length of the heat roller 350 so as to heat the heat roller 350.

A toner removal means 358 is disposed so as to remove residual toner particles remaining on the surface of the heat roller 350. The toner removal means 358 comprises a mounting member 359 in parallel with the axis of the heat roller 350 and is fixed to the apparatus housing 150. The mounting member 359 has an upper mounting portion 360 and a lower mounting portion 361, to which a toner removal member 362 is mounted. The toner removal member 362 comprises an elastic support plate 363 and a toner wiper 364 made of heat proof rubber material, and abuts against the surface of the heat roller 350 along the entire longitudinal direction thereof.

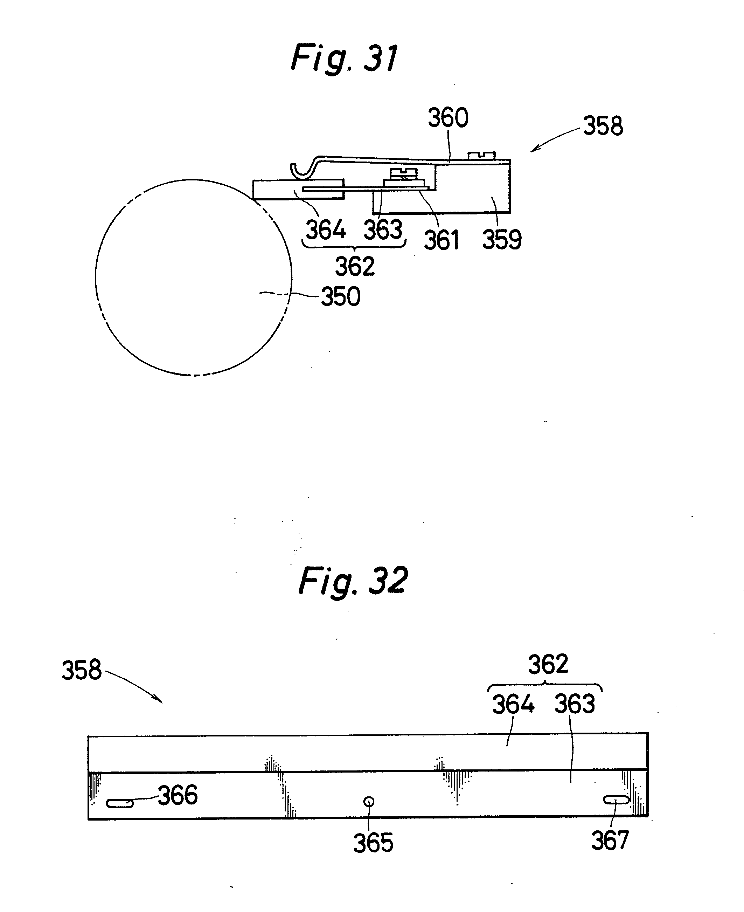

Figure 31 is a simplified side view of the toner removal means 358, and Figure 32 is a plane view of the toner removal member 362. The support plate 363 has a mounting hole 365 at the longitudinal center of the support plate 363. The support plate 363 is fixedly secured to the lower mounting portion 361 of the mounting member 359 with a bolt penetrating through the mounting hole 365. Both ends of the support plate 363 has guide slots 366 and 367. These guide slots 366 and 367 elongate along the longer side of the support plate 363 as shown in Figure 32. A pin 368 (refer to Figure 30) passing loosely through the guide slot 366 projects onto the lower mounting portion 361 of the mounting member 359. A pin (not shown) projecting onto the lower mounting portion 361 passes loosely through the guide slot 367 similarly. In the case where the support plate 363 and the wiper 364 are transformed by heat of the heater element 356, the pins 368 etc. and the guide slots 366 and 367 allow the support plate 363 expand and contract along an axial line of the heat roller 350. Therefore the wiper 364 is substantially capable of abuting against the overall surface of the heat roller 350. The heat roller 350 is prevented from being affected adversely due to heat distortion.

There is provided a spring 370 so as to cause the wiper 364 to abut against the outer surface of the heat roller 350 elastically. The U-shaped spring 370 is composed of a pair of arms 371 and 372 elongating to the wiper 364 and a joining portion 373 to join both arms 371 and 372. The arms 371 and 372 respectively have downwardly bending lip portions 374 and 375 which are in a U-shaped fashion in a vertical plane with respect to an axial line of the heat roller 350. The joint portion 373 of the spring 370 is secured to the upper mounting portion 360 of the mounting member 359 by the screw 376.

The spring 370 is mounted at a distance to the upper portion 360 of the mounting member 359 along an axial line of the heat roller 350. Lip portions 374 and 375 are biased by the arms 371 and 372 to press down the upper side of the wiper 364 against the periphery of the heat roller 350. Accordingly the wiper 364 is elastically in contact with the periphery of the heat roller 350; still further this substantial contact is retained in alignment with the overall longer side of the heat roller 350. A plurality of the springs 370 are spaced in parallel with the heat roller 350 along the mounting member 359, therefore, the springs 370 are prevented from being transformed due to heat distortion by means of the heat element 356. Therefore the wiper 364 is biased by the arms 371 and 372 so as to abut against the periphery of the heat roller 350 substantially.

Driving of timing pulse

Figure 33 illustrates a front view of the driving mechanism for providing timing pulse to control the electrostatic copying apparatus 150, and Figure 34 a plane view of Figure 33. A timing belt 382 passes over a pulley 380 driven to rotate by means of a motor 354, and over a pulley 381. A circular timing plate 383 is coaxially fixed to the pulley 381. The circular timing plate 383 has a plurality of notches 384 at equal intervals circumferentially. These notches 384 are detected by an optical sensor which includes a light generating element 385 and a light receiving element 386. The output signal from the receiving element 386 controls the electrostatic copying apparatus.

**Claims**

1. An electrostatic copying apparatus wherein a stationary original document image is projected onto a photosensitive member (2) during movement of an optical device (238, 248, 250) for exposing, and an electrostatic latent image formed on the photosensitive member is developed and transferred onto a copy sheet and then is fixed, the copying apparatus including jam detecting means (51 to 55) for immediately detecting when a copy sheet is jammed in a copy sheet transport path and having portions thereof displaceable to give access to the transport path for the removal of jammed copy sheets therefrom, there being provided in the transport path a transport means (26) for transporting copy sheets after completion of the image transfer operation, characterized in that in the region of the photosensitive member (2) the transport path comprises a pair of top and bottom guide plates (21, 22) for guiding copy sheets, said guide plates being mounted so as to abut against a transferring zone of the photosensitive member, being mounted for pivotal movement about a fixed horizontal shaft (53) and being spring-biased (56) to approach each other in the vicinity of the transferring zone, the transport means (26) is carried by a frame (25) extending beneath the photosensitive member and pivotably supported near the downstream end for swinging movement away from the photosensitive member about a horizontal axis (70) and supporting means (85) for releasably supporting the frame (25) in its raised operative position adjacent the photosensitive member, the bottom guide plate (22) being supported in its operative position by the frame (25) and being downwardly biased (by 59) so as to move away from the top guide plate (21) in the vicinity of the transferring zone when the frame (25) is pivotally swung downwardly about its supporting horizontal axis (70).

2. An electrostatic copying apparatus as claimed in claim 1, characterized in that a peeling pawl (23) is provided above the frame (25) for peeling off copy sheets from the photosensitive member (2) and is spring-biased (by 101) about a horizontal axis (99) toward the peripheral surface of the photosensitive member, further biasing means (100) being provided for causing the peeling pawl to move away from the peripheral surface of the photosensitive member against the elastic force of the spring bias (101) when the frame is caused to swing downwardly from its operative position.

3. An electrostatic copying apparatus as claimed in claim 1 or 2, characterized in that the frame (25) and guide plates (21, 22) are so mounted that any member which contacts a copy sheet at least a portion of which is in a transferring area is electrically insulated from the apparatus housing.

4. An electrostatic copying apparatus as claimed in any preceding claim, characterized in that it is adapted so to operate that the distance between successive copy sheets is less in the middle of a multiple copy run than between successive copy sheets which are not in a multiple copy run.

**Patentansprüche**

1. Elektrostatisches Kopiergerät, bei dem die Abbildung eines ortsfesten Originaldokuments während einer Bewegung einer optischen Vorrichtung (238, 248, 250) auf ein lichtempfindliches Element zur Belichtung projiziert und eine elektrostatische, latente, auf dem lichtempfindlichen Element ausgebildete Abbildung entwickelt, auf ein Kopierpapierblatt übertragen sowie anschließend fixiert wird und das eine Stau-Erfassungseinrichtung (51 bis 55) zur sofortigen Feststellung, wenn sich ein Kopierpapierblatt in einer Kopierpapier-Transportbahn staut, sowie verlagerbare, einen Zugang zur Transportbahn für die Entnahme von gestauten Kopierpapierblättern aus dieser ermöglichende Teile enthält, wobei in der Transportbahn eine Transportvorrichtung (26) zum Befördern von Kopierpapierblättern nach Abschluß des Bildübertragungsvorgangs vorgesehen ist, dadurch gekennzeichnet, daß die Transportbahn im Bereich des lichtempfindlichen Elements (2) zur Führung der Kopierpapierblätter eine obere sowie untere Führungsplatte (21, 22) enthält, die derart angebracht sind, daß sie an eine Übertragungszone des lichtempfindlichen Elements angrenzen, und die für eine Schwenkbewegung um eine feste Horizontalachse (53) gelagert sowie zu ihrer gegenseitigen Annäherung in der Nachbarschaft der Übertragungszone von einer Feder (56) belastet sind, daß die Transportvorrichtung (26) von einem Rahmen (25), der unterhalb des lichtempfindlichen Elements angeordnet sowie nahe seinem stromabwärtigen Ende schwenkbar für eine Schwenkbewegung vom lichtempfindlichen Element hinweg um eine horizontale Achse (70) gelagert und von einer Stützeinrichtung (85), die den Rahmen (25) in seiner angehobenen, an das lichtempfindliche Element angrenzenden Arbeitsstellung abstützt, gehalten ist und daß die untere Führungsplatte (22) in ihrer Arbeitsstellung vom Rahmen (25) getragen sowie abwärts (durch 59) belastet ist, so daß sie sich von der oberen Führungsplatte (21) in der Nähe der Übertragungszone wegbewegt, wenn der Rahmen (25) um seine ihn lagernde horizontale Achse (70) abwärts geschwenkt wird.

2. Elektrostatisches Kopiergerät nach Anspruch 1, dadurch gekennzeichnet, daß eine die Kopierpapierblätter vom lichtempfindlichen Element (2) ablösende Abstreifklinke (23) oberhalb des Rahmens (25) vorgesehen sowie um eine horizontale Achse (99) zur Außenumfangsfläche des lichtempfindlichen Elements hin (durch 101) federbelastet ist und daß eine weitere Vorspanneinrichtung (100) vorhanden ist, die die Abstreifklinke von der Außenumfangsfläche des lichtempfindlichen Elements gegen die Kraft der Feder (101) wegbewegt, wenn der Rahmen aus seiner Arbeitsstellung zu einer Abwärtsschwenkung gebracht wird.

3. Elektrostatisches Kopiergerät nach Anspruch 1 oder 2, dadurch gekennzeichnet, daß der Rahmen (25) und die Führungsplatten (21, 22) so angebracht sind, daß irgendein Teil dieser, das ein Kopierpapierblatt berührt, von dem sich wenigstens ein Stück in der Übertragungszone befindet, vom Gerätegehäuse elektrisch isoliert ist.

4. Elektrostatisches Kopiergerät nach einem der vorhergehenden Ansprüche, dadurch gekennzeichnet, daß es für einen derartigen Betrieb ausgebildet ist, daß der Abstand zwischen aufeinanderfolgenden Kopierpapierblättern in der Mitte eines Mehrfachkopierdurchlaufs geringer ist als zwischen aufeinanderfolgenden Kopierpapierblättern in einem Nicht-Mehrfachkopierdurchlauf.

**Revendications**

1. Appareil à copier électrostatique, dans lequel une image d'un document original stationnaire est projetée sur un support photosensible (2) pendant le mouvement d'un dispositif optique (238, 248, 250) d'exposition et dans lequel une image latent électrostatique formée sur le support photosensible est développée et transférée sur une feuille de copie et y est ensuite fixée, l'appareil à copier comportant des moyens de détection de bourrage (51 à 55) pour détecter immédiatement lorsqu'une feuille de copie est bourrée dans un trajet de transport de feuilles de copie et ayant des portions pouvant être déplacées pour permettre d'accéder au trajet de transport pour en enlever les feuilles de copie bourrées, un moyen de transport (26) étant prévu dans le trajet de transport pour transporter les feuilles de copié à la fin de l'opération de transfert d'image, caractérisé en ce que, dans la région du support photosensible (2), le trajet de transport comporte deux plaques de guidage, supérieure (21) et inférieure (22) pour guider les feuilles de copie, ces plaques de guidage étant montées de façon à venir buter contre une zone de transfert du support photosensible, étant montées pour pivoter autour d'un arbre horizontal fixe (53) et étant rappelées par ressort (56) pour se rapprocher l'une de l'autre au voisinage de la zone de transfert, en ce que le moyen de transport (26) est porté par un bâti (25) s'étendant en dessous du support photosensible et supporté à pivotement au voisinage de l'extrémité aval pour basculer en s'éloignant autour du support photosensible autour d'un axe horizontal (70), des moyens de support (85) supportant de façon dégageable le cadre (25) dans sa position opérationnelle haute adjacente au support photosensible, la plaque de guidage inférieure (22) étant supportée dans sa position opérationnelle par le cadre (25) et étant rappelée vers le bas (par 59) de façon à s'éloigner de la plaque de guidage supérieure (21) au voisinage de la zone de transfert, lorsque le cadre (25) bascule vers le bas autour de son axe horizontal support (70).

2. Appareil à copier électrostatique selon la revendication 1, caractérisé en ce qu'un cliquet de détachement (23) est prévu au-dessus du cadre (25) pour détache les feuilles de copie du support photosensible (2) et est rappelé par ressort (par 101) autour d'un axe horizontal (99) en direction de la surface périphérique de l'élément photosensible, d'autres moyens de rappel (100) étant prévus pour déplacer le cliquet de détachement en l'éloignant de la surface périphérique du support photosensible contre la force élastique du ressort de rappel (101) lorsque le cadre bascule vers le bas depuis sa position opérationnelle.

3. Appareil à copier électrostatique selon la revendication 1 ou la revendication 2, caractérisé en ce que le cadre (25) et les plaques de guidage (21, 22) sont montés de telle sorte que tout élément qui est en contact avec une feuille de copie, dont au moins une portion est dans une zone de transfert, est électriquement isolé du carter de l'appareil.

4. Appareil à copier électrostatique selon l'une quelconque des revendications précédentes, caractérisé en ce qu'il est adapté à fonctionner de telle sorte que la distance entre les feuilles de copie successives est moindre dans le milieu d'une série de copies multiples qu'entre des feuilles de copie successives qui ne sont pas dans une série de copies multiples.

# Fig. 1

# Fig. 2

# Fig. 3

0031726

Fig. 4

Fig. 5

Fig. 6

Fig. 7

# Fig. 8

Fig. 9

*Fig. 10*

*Fig. 11*

## Fig. 12

## Fig. 14

## Fig. 13

## Fig. 15

# *Fig. 16*

*Fig. 17*

## Fig. 18

# Fig. 19

# Fig. 20

# Fig. 21

# Fig. 22

*Fig. 23*

*Fig. 24*

## Fig. 25

## Fig. 26

## Fig. 27

## Fig. 28

## Fig. 29

(1)　　　　　　(2)　　　　　　(3)

## Fig. 30

## Fig. 31

## Fig. 32

# Fig. 33

# Fig. 34